# EUROPEAN PATENT APPLICATION

(11) **EP 4 645 929 A1**
(43) Date of publication of application: **05.11.2025**
(21) Application number: 22969834.5
(22) Date of filing: 30.12.2022
(51) Int. Cl.: H04W 16/28

(54) **SPATIAL FILTER PREDICTION METHODS, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN)
(74) Representative: RGTH
(86) International application number: PCT/CN2022/144184
(87) International publication number: WO 2024/138692

(57) **Abstract**

The present application provides spatial filter prediction methods, a terminal device, and a network device. A method comprises: a terminal device measures a first spatial filter set; and, according to a measurement result of the first spatial filter set, the terminal device performs spatial filter prediction on a second spatial filter set, wherein the first spatial filter set corresponds to a first frequency band, and the second spatial filter set corresponds to a second frequency band.

## Description

### TECHNICAL FIELD

This application relates to the field of communications technologies, and more specifically, to a spatial filter prediction method, a terminal device, and a network device.

### BACKGROUND

In some communications systems, a spatial filter management mechanism is introduced, to select a spatial filter with relatively high quality by measuring spatial filters. In an example of downlink spatial filter management, the spatial filters are measured by a terminal device. If a terminal device and a network device may communicate with each other in a plurality of frequency bands, the terminal device is required to measure all spatial filters corresponding to the plurality of frequency bands, which is not conducive to reducing overheads and a measurement delay of the terminal device.

### SUMMARY

This application provides a spatial filter prediction method, a terminal device, and a network device. The following describes various aspects related to this application.

According to a first aspect, there is provided a spatial filter prediction method. The method includes: measuring, by a terminal device, a first spatial filter set; and performing, by the terminal device, spatial filter prediction on a second spatial filter set based on a measurement result of the first spatial filter set, where the first spatial filter set corresponds to a first frequency band, and the second spatial filter set corresponds to a second frequency band.

According to a second aspect, there is provided a spatial filter prediction method. The method includes: transmitting, by a network device, first configuration information to a terminal device, where the first configuration information is used to configure a first spatial filter set and/or a second spatial filter set, and a measurement result of the first spatial filter set is used to perform spatial filter prediction on the second spatial filter set, where the first spatial filter set corresponds to a first frequency band, and the second spatial filter set corresponds to a second frequency band.

According to a third aspect, there is provided a spatial filter prediction method. The method includes: measuring, by a terminal device, a first spatial filter set; and transmitting, by the terminal device, a measurement result of the first spatial filter set to a network device, where the measurement result of the first spatial filter set is used to perform spatial filter prediction on a second spatial filter set, where the first spatial filter set corresponds to a first frequency band, and the second spatial filter set corresponds to a second frequency band.

According to a fourth aspect, there is provided a spatial filter prediction method. The method includes: receiving, by a network device, a measurement result of a first spatial filter set transmitted by a terminal device; and performing, by the network device, spatial filter prediction on a second spatial filter set based on the measurement result of the first spatial filter set, where the first spatial filter set corresponds to a first frequency band, and the second spatial filter set corresponds to a second frequency band.

According to a fifth aspect, there is provided a terminal device. The terminal device includes: a measurement unit, configured to measure a first spatial filter set; and a prediction unit, configured to perform spatial filter prediction on a second spatial filter set based on a measurement result of the first spatial filter set, where the first spatial filter set corresponds to a first frequency band, and the second spatial filter set corresponds to a second frequency band.

According to a sixth aspect, there is provided a network device. The network device includes: a transmitting unit, configured to transmit first configuration information to a terminal device, where the first configuration information is used to configure a first spatial filter set and/or a second spatial filter set, and a measurement result of the first spatial filter set is used to perform spatial filter prediction on the second spatial filter set, where the first spatial filter set corresponds to a first frequency band, and the second spatial filter set corresponds to a second frequency band.

According to a seventh aspect, there is provided a terminal device. The terminal device includes: a measurement unit, configured to measure a first spatial filter set; and a transmitting unit, configured to transmit a measurement result of the first spatial filter set to a network device, where the measurement result of the first spatial filter set is used to perform spatial filter prediction on a second spatial filter set, where the first spatial filter set corresponds to a first frequency band, and the second spatial filter set corresponds to a second frequency band.

According to an eighth aspect, there is provided a network device. The network device includes: a receiving unit, configured to receive a measurement result of a first spatial filter set transmitted by a terminal device; and a prediction unit, configured to perform spatial filter prediction on a second spatial filter set based on a measurement result of the first spatial filter set, where the first spatial filter set corresponds to a first frequency band, and the second spatial filter set corresponds to a second frequency band.

According to a ninth aspect, there is provided a terminal device. The terminal device includes a memory and a processor, where the memory is configured to store a program, and the processor is configured to invoke the program in the memory to execute the method according to the first aspect or the third aspect.

According to a tenth aspect, there is provided a network device. The network device includes a memory and a processor, where the memory is configured to store a program, and the processor is configured to invoke the program in the memory, to execute the method according to the second aspect or the fourth aspect.

According to an eleventh aspect, there is provided an apparatus. The apparatus includes a processor configured to invoke a program from a memory to execute the method according to any one of the first aspect to the fourth aspect.

According to a twelfth aspect, there is provided a chip. The chip includes a processor, configured to invoke a program from a memory, such that a device installed with the chip executes the method according to any one of the first aspect to the fourth aspect.

According to a thirteenth aspect, there is provided a computer-readable storage medium, where the computer-readable storage medium stores a program that causes a computer to execute the method according to any one of the first aspect to the fourth aspect.

According to a fourteenth aspect, there is provided a computer program product. The computer program product includes a program, where the program causes a computer to execute the method according to any one of the first aspect to the fourth aspect.

According to a fifteenth aspect, there is provided a computer program, where the computer program causes a computer to execute the method according to any one of the first aspect to the fourth aspect.

According to this application, a spatial filter set corresponding to some frequency bands (for example, a second frequency band) is predicted based on a measurement result of a spatial filter set corresponding to some other frequency bands (for example, a first frequency band), so that it may be unnecessary to measure spatial filters corresponding to all frequency bands, thereby reducing overheads and a measurement delay of the terminal device.

### BRIEF DESCRIPTION OF DRAWINGS

FIG. 1 shows a wireless communications system 100 to which embodiments of this application are applied.
FIG. 2 is a schematic diagram of a multi-beam system to which embodiments of this application are applicable.
FIG. 3 is a schematic diagram of a multi-beam system to which another embodiment of this application is applicable.
FIG. 4 is a schematic diagram of downlink beam sweeping according to an embodiment of this application.
FIG. 5 is a schematic diagram of a neuron to which embodiments of this application are applicable.
FIG. 6 is a schematic diagram of a neural network to which embodiments of this application are applicable.
FIG. 7 is a schematic diagram of a convolutional neural network to which embodiments of this application are applicable.
FIG. 8 is a schematic diagram of a recurrent neural network to which embodiments of this application are applicable.
FIG. 9 is a schematic diagram of a long short-term memory model to which embodiments of this application are applicable.
FIG. 10 is a schematic diagram of beam prediction in spatial domain according to an embodiment of this application.
FIG. 11 is a schematic diagram of beam prediction in spatial domain according to another embodiment of this application.
FIG. 12 is a schematic diagram of beam prediction in time domain according to an embodiment of this application.
FIG. 13 is a schematic diagram of first spatial filter sets and second spatial filter sets according to an embodiment of this application.
FIG. 14 is a schematic diagram of spatial filter prediction in frequency domain according to an embodiment of this application.
FIG. 15 is a schematic diagram of spatial filter prediction in frequency domain according to another embodiment of this application.
FIG. 16 is a schematic flowchart of a spatial filter prediction method according to an embodiment of this application.
FIG. 17 is a schematic flowchart of a spatial filter prediction method according to another embodiment of this application.
FIG. 18 is a schematic diagram of a spatial filter indication manner according to an embodiment of this application.
FIG. 19 is a schematic block diagram of a terminal device according to an embodiment of this application.
FIG. 20 is a schematic block diagram of a network device according to an embodiment of this application.
FIG. 21 is a schematic block diagram of a terminal device according to another embodiment of this application.
FIG. 22 is a schematic block diagram of a network device according to another embodiment of this application.
FIG. 23 is a schematic structural diagram of a communications apparatus according to an embodiment of this application.

### DESCRIPTION OF EMBODIMENTS

The following describes the technical solutions in this application with reference to the accompanying drawings.

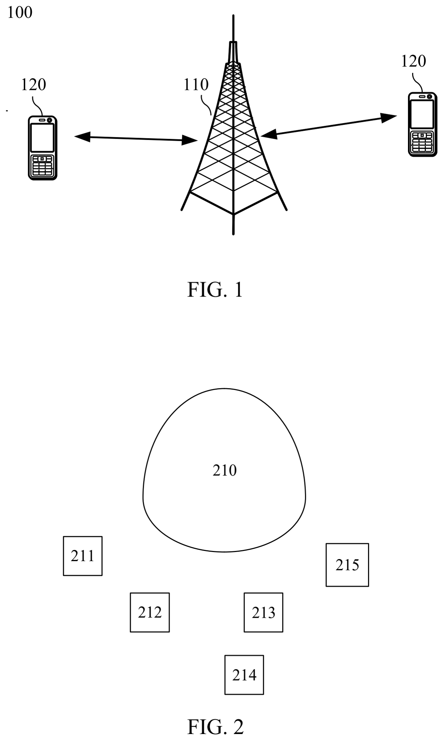

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 exemplarily shows one network device and two terminals. Optionally, the wireless communications system 100 may include a plurality of network devices, and another quantity of terminal devices may be included within coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and an LTE time division duplex (time division duplex, TDD) system. The technical solutions provided in this application may be further applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, a user apparatus, or the like. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without relaying a communication signal by using a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In other examples, a helicopter or an unmanned aerial vehicle may be configured to function as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that the communications device involved in this application may be a network device, or may be a terminal device. For example, the first communications device is a network device, and the second communications device is a terminal device. For another example, the first communications device is a terminal device, and the second communications device is a network device. For another example, both the first communications device and the second communications device are network devices, or both are terminal devices.

It should be understood that all or some of functions of the communications device in this application may also be implemented by software functions running on hardware, or by virtualization functions instantiated on a platform (for example, a cloud platform).

### Multi-beam system

A design objective of a communications system (for example, NR) includes implementing high-bandwidth communication in a high frequency band (for example, a frequency band above 6 GHz). When a working frequency becomes higher, path loss in a transmission process increases, which affects a coverage capability of a high-frequency system. Therefore, to effectively ensure coverage of a high frequency band, an effective technical solution is based on massive multiple-in multiple-out (Massive multiple-in multiple-out, Massive MIMO), to form a shaped beam with greater gain, which overcomes propagation loss, and ensures coverage of the communications system.

Currently, a common large-scale antenna array is a millimeter-wave antenna array. Due to a relatively short wavelength of millimeter waves emitted by the millimeter-wave antenna array, a spacing between antenna elements in the antenna array may be relatively short, and an aperture of the antenna elements may be relatively small, so that more physical antenna elements may be integrated into the two-dimensional antenna array with a limited size.

In addition, due to the limited size of the millimeter-wave antenna array and in consideration of factors such as hardware complexity, costs, and power consumption, a digital beamforming method cannot be used, but an analog beamforming method is generally used, which may reduce implementation complexity of a device while enhancing network coverage.

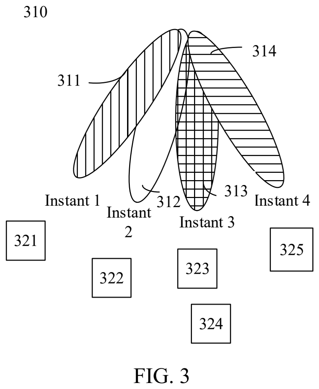

To facilitate understanding of the multi-beam system, with reference to FIG. 2 and FIG. 3, the following describes a beam-based communication process by using a scenario of communication between a network device and a terminal as an example.

Referring to FIG. 2, in a conventional communications system (for example, an LTE communications system), a relatively wide beam (beam) 210 is typically used to cover an entire cell (or referred to as a "sector"). In this way, terminals (for example, terminals 211 to 215) in the cell may communicate with the network device at each instant by using the relatively wide beam, for example, to acquire transmission resources allocated by the network device.

Referring to FIG. 3, in a relatively new communications system (for example, NR), a multi-beam (Multi-beam) system 310 may be used to cover the entire cell, that is, each beam (for example, beams 311 to 314) in the multi-beam system covers a relatively small area within the cell and achieves coverage of the entire cell by the plurality of beams through beam sweeping (beam sweeping).

In a beam sweeping process, different beams are used at different instants to cover different areas in the cell. For example, at an instant 1, the communications system may cover, by using the beam 311, the area in which the terminal 321 is located. At an instant 2, the communications system may cover, by using the beam 312, the area in which the terminal 322 is located. At an instant 3, the communications system may cover, by using the beam 313, the area in which the terminal 323 and the terminal 324 are located. At an instant 4, the communications system may cover, by using the beam 314, the area in which the terminal 325 is located.

For the multi-beam system, transmit energy may be more concentrated by using relatively narrow beams, thus achieving coverage over a longer distance. However, since the beams are relatively narrow, each beam can cover only part of the area in the cell. Therefore, the multi-beam system may be understood as "exchanging time for space".

Generally, a beam used on a transmitting end to transmit a signal is referred to as a "transmit beam". A beam used on a receiving end to receive a signal is referred to as a "receive beam".

In some cases, the transmit beam may also be referred to as a spatial domain transmission filter (spatial domain transmission filter) or a transmission spatial filter. Accordingly, the receive beam may also be referred to as a spatial domain reception filter (spatial domain reception filter) or a reception spatial filter. In some other cases, the transmit beam may also be referred to as a spatial domain transmission parameter (spatial domain transmission parameter). Accordingly, the receive beam may also be referred to as a spatial domain reception parameter (spatial domain reception parameter). For ease of understanding, a beam is mainly used as an example for description in embodiments of this application.

In a scenario in which the network device communicates with the terminal, if the network device and the terminal support multi-beam transmission, before the network device communicates with the terminal, both the network device and the terminal are required to select a suitable transmit beam and a suitable receive beam through a beam management process. Downlink beam management is used as an example. The downlink beam management includes processes such as downlink beam sweeping (beam sweeping), beam measurement and reporting (measurement & reporting) by the terminal device, and downlink beam indication (beam indication) by the network device. The downlink beam management process is described in detail below.

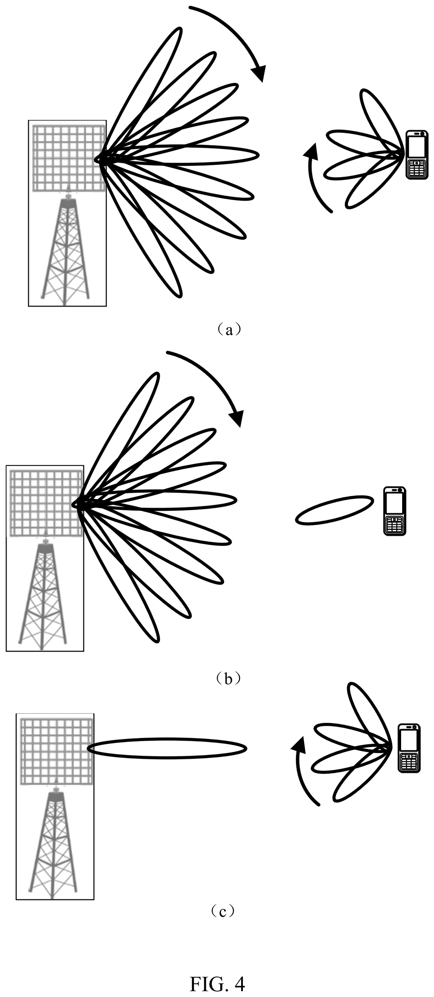

The downlink beam sweeping process may be classified into three processes: a P1 process, a P2 process, and a P3 process. The P1 process may mean that the network device uses different transmit beams for transmission, and the terminal device uses different receive beams for reception, as shown in part (a) of FIG. 4. The P2 process may mean that the network device uses different transmit beams for transmission, and the terminal device uses a same receive beam for reception, as shown in part (b) of FIG. 4. The P3 process may mean that the network device uses a same transmit beam for transmission, and the terminal device uses different receive beams for reception, as shown in part (c) of FIG. 4. Generally, the network device may implement the beam sweeping process by transmitting a downlink reference signal. The downlink reference signal may include, for example, a synchronization signal/physical broadcast channel block (synchronization signal/physical broadcast channel block, SSB) and/or a channel state information reference signal (channel-state-information reference signal, CSI-RS).

In some implementations, measurement of a downlink beam may be implemented by measuring a CSI-RS and/or an SSB transmitted on the downlink beam. In some implementations, beams may be measured by using a layer 1 (layer 1, L1) measurement quantity. L1 measurement may be directly processed at a physical layer, with a relatively short processing delay. Currently, the L1 measurement quantity used for beam measurement may include layer 1-reference signal received power (layerl-reference signal receiving power, L1-RSRP) and layer 1-signal-to-interference-plus-noise ratio (L1-signal to interference plus noise ratio, L1-SINR).

It should be noted that, in embodiments of this application, in addition to the L1 measurement quantity described above, another measurement quantity such as an L3 measurement quantity may be used for beam measurement. Certainly, the measurement quantity to which embodiments of this application are applicable may alternatively be a measurement quantity newly introduced in a future communications system.

The beam measurement and reporting process may mean that the terminal device may measure a plurality of transmit beams (P2 process) or transmit-receive beam pairs (P1 process) for beam selection. For example, the terminal device may select an optimal beam, and transmit the optimal beam to the network device. The optimal beam may be, for example, K beams with the highest L1-RSPR or L1-SINR, where K is an integer greater than or equal to 1. When reporting to the network device, the terminal device may report only beam information of the optimal beam, or may report both beam information and a corresponding measurement result of the optimal beam. The beam information may include an identifier of a reference signal, a number of a reference signal, and the like. In some embodiments, the terminal device may report beams in the form of CSI.

The network device may decode the beam information reported by the terminal device, and select a transmit beam to be used from beams reported by the terminal device. The network device may indicate the beam information to the terminal device by using a transmission configuration indicator (transmission configuration indicator, TCI) state (state), to indicate a transmit beam to be used. The TCI state may include an SSB index or a CSI-RS resource index, and each index may correspond to one beam. The terminal device may perform downlink reception by using a receive beam corresponding to a transmit beam of the SSB or CSI-RS. The TCI state may be carried in medium access control (media access control, MAC) signalling and/or downlink control information (downlink control information, DCI) signalling, which is not specifically limited in embodiments of this application.

In the beam selection process described above with reference to FIG. 4, it is typically necessary to traverse all combinations of receive beams and transmit beams to select a suitable beam. However, it takes a long time to traverse all combinations, resulting in relatively low beam selection efficiency.

For example, it is assumed that the network device deploys 64 different downlink transmit directions (carried by a maximum of 64 SSBs) in FR2. Accordingly, the terminal device performs receive beam sweeping by using one or more antenna panels simultaneously during reception, with each antenna panel having four receive beams. Therefore, the terminal device is required to measure at least 256 beam pairs, that is, 256 resources are required for downlink resource overheads. In terms of time, each SSB period is approximately 20 ms, and it takes four SSB periods to complete measurement of four receive beams. Assuming that a plurality of receive antenna panels may simultaneously perform beam sweeping, at least 80 ms is required.

As a quantity of beams in a future large-scale MIMO system increases, using a beam management scheme based on beam sweeping to find an optimal beam pair will lead to higher reference signal transmission overheads and a longer beam sweeping delay. Therefore, to avoid the foregoing problems, beam management based on a first model is introduced in R18. The first model may be a neural network model, such as an AI model or an ML model. The following describes the neural network model.

### Neural network

In recent years, artificial intelligence research represented by a neural network has made great achievements in many fields, and will also play an important role in people's production and life for a long time to come. The neural network may be understood as a computational model consisting of a plurality of neuron nodes connected to each other, where a connection between nodes may represent a weighted value from an input signal to an output signal, typically referred to as a weight. Each node performs a weighted summation on different input signals and outputs a result through a specific activation function.

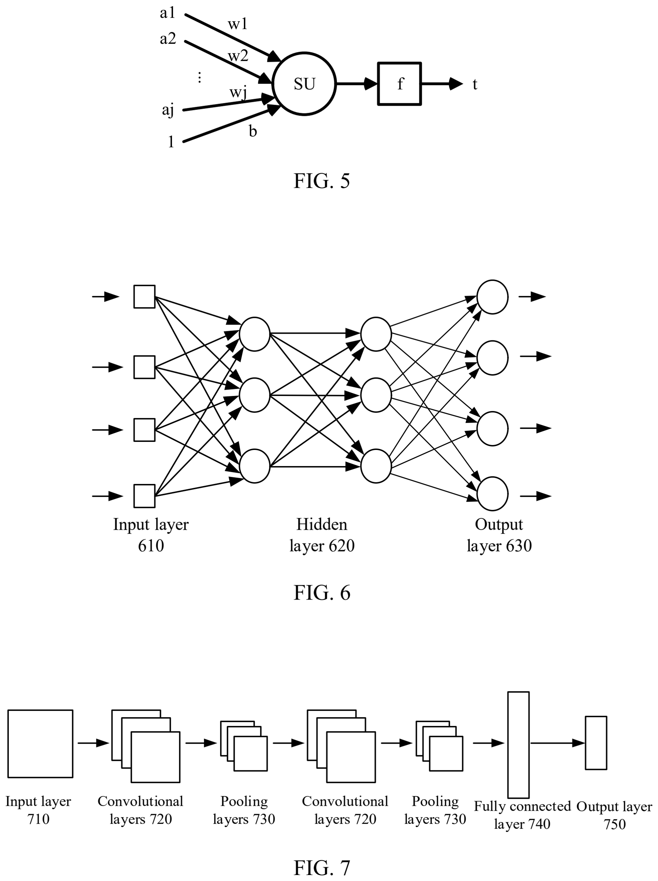

As shown in FIG. 5, the neuron may implement nonlinear mapping through the activation function. Input to the neuron may be denoted as A, with each dimension of the input denoted as aⱼ and a corresponding weight denoted as wⱼ, which enhances or attenuates the input in combination with summation units (summation units, SU). In addition, output of the SU may be input to the activation function f to obtain output t, where a value of j is 1, 2, ..., n.

Common neural networks include a convolutional neural network (convolutional neural network, CNN), a recurrent neural network (recurrent neural network, RNN), a deep neural network (deep neural network, DNN), and the like.

With reference to FIG. 6, the following describes a neural network to which embodiments of this application are applicable. Different layers of the neural network shown in FIG. 6 may be classified into three types according to their locations: an input layer 610, a hidden layer 620, and an output layer 630. Generally, the first layer is the input layer 610, the last layer is the output layer 630, and the middle layer between the first layer and the last layer is the hidden layer 620.

The input layer 610 is configured to input data. The input data may be, for example, a received signal received by a receiver. The hidden layer 620 is configured to process input data, for example, perform decompression processing on a received signal. The output layer 630 is configured to output processed output data, for example, output a decompressed signal.

As shown in FIG. 6, the neural network includes a plurality of layers, and each layer includes a plurality of neurons. Neurons between two layers may be fully connected, or may be partially connected. For connected neurons, output of neurons at an upper layer may be used as input of neurons at a lower layer.

With continuous development of neural network research, a neural network deep learning algorithm is also proposed in recent years. A large quantity of hidden layers are introduced into a neural network to form a DNN. More hidden layers enable the DNN to better describe a complex situation in a real world. In theory, a model with a larger quantity of parameters has higher complexity and also a larger capacity, which means that the model can complete a more complex learning task. This neural network model is widely applied in aspects such as pattern recognition, signal processing, optimization combination, and anomaly detection.

A CNN is a deep neural network with a convolutional structure. As shown in FIG. 7, the structure of the CNN may include an input layer 710, convolutional layers 720, pooling layers 730, a fully connected layer 740, and an output layer 750.

Each convolutional layer 720 may include a plurality of convolutional operators, and a convolutional operator is also referred to as a kernel. A function of the convolutional operator may be considered as a filter for extracting specific information from an input signal. The convolutional operator may essentially be a weight matrix, and the weight matrix is generally pre-defined.

Weight values in these weight matrices are obtained through a large amount of training in actual applications. Each weight matrix formed by the weight values obtained through the training may extract information from an input signal, to help the CNN perform correct prediction.

When the CNN has a plurality of convolutional layers, an initial convolutional layer usually extracts more general features, and the general features may also be referred to as low-level features. As a depth of the CNN increases, features extracted by subsequent convolutional layers are increasingly complex.

For the pooling layers 730, since a quantity of training parameters is often required to be reduced, a pooling layer is often required to be periodically introduced behind the convolutional layer. For example, as shown in FIG. 7, one pooling layer may follow one convolutional layer, or one or more pooling layers may follow a plurality of convolutional layers. In a signal processing process, the only purpose of the pooling layer is to reduce a size of space occupied by extracted information.

For the fully connected layer 740, the CNN still cannot output required output information after the processing at the convolutional layers 720 and the pooling layers 730. As mentioned above, the convolutional layers 720 and the pooling layers 730 only extract features and reduce a quantity of parameters brought by the input data. However, to generate the final output information (for example, a bit stream of original information transmitted by a transmitter), the CNN is also required to utilize the fully connected layer 740. Generally, the fully connected layer 740 may include a plurality of hidden layers, and parameters included in the plurality of hidden layers may be obtained by pre-training based on related training data of a specific task type. For example, the task type may include decoding a data signal received by the receiver. For another example, the task type may include performing channel estimation based on a pilot signal received by the receiver.

Behind the plurality of hidden layers in the fully connected layer 740, that is, the last layer of the entire CNN is the output layer 750, which is configured to output a result. Generally, a loss function (for example, a loss function similar to a categorical cross-entropy) is set for the output layer 750, to calculate a prediction error, or in other words, to evaluate a degree of difference between the result (also referred to as a predicted value) output by the CNN model and an ideal result (also referred to as a real value).

To minimize the loss function, the CNN model is required to be trained. In some implementations, the CNN model may be trained by using a backpropagation algorithm (backpropagation algorithm, BP). A training process of the BP includes a forward propagation process and a backpropagation process. In the process of forward propagation (as shown in FIG. 7, propagation from 710 to 750 is forward propagation), the input data is input into the foregoing layers of the CNN model, processed layer by layer, and transmitted to the output layer. If a difference between the result that is output at the output layer and the ideal result is relatively large, minimizing the foregoing loss function is set as an optimization objective, and forward propagation is switched to backpropagation (as shown in FIG. 7, propagation from 750 to 710 is backpropagation). A partial derivative of the optimization objective with respect to each neuron weight value is obtained layer by layer, to constitute a gradient of the optimization objective with respect to a weight value vector, which is used as a basis for modifying a model weight. Then, a training process of the CNN is completed in a weight modification process. When the foregoing error reaches an expected value, the training process of the CNN ends.

It should be noted that the CNN shown in FIG. 7 is merely an example of a convolutional neural network. In specific applications, the convolutional neural network may alternatively exist in a form of another network model, which is not limited in embodiments of this application.

The purpose of the RNNs is to process sequential data. In a conventional neural network model (for example, a CNN model), From the input layer to the hidden layer, and then to the output layer, the layers are fully connected, but nodes in a same layer are not connected to each other. However, such a common neural network is unable to solve many problems. For example, when predicting a current word in a sentence, it is generally required to use a previous word, because words in the sentence are not independent of each other. RNNs are referred to as recurrent neural networks because a current output of a sequence is also related to a previous output. Specifically, the network memorizes previous information and applies the previous information to computation of a current output. In other words, nodes between hidden layers are no longer unconnected but are connected. In addition, the input to the hidden layers includes not only the output of the input layer but also the output of the hidden layers at a previous instant. In theory, the RNNs can process sequential data of any length.

Training an RNN is similar to training a conventional ANN (artificial neural network), They both use the BP error backpropagation algorithm, but have a difference, which lies in that, if RNNs are unfolded, parameters W, U, and V are shared, but the conventional neural network is not the case. Moreover, in a gradient descent algorithm, output at each step depends not only on the network at a current step but also on states of the network at previous steps. For example, when t = 4, it is also required to backpropagate through three steps with their respective gradients being calculated. The learning algorithm is referred to as a backpropagation through time (back propagation through time, BPTT) algorithm.

The artificial neural network and the convolutional neural network already exist, but the recurrent neural network is still required. The reason is simple: No matter for the convolutional neural network or the artificial neural network, their underlying assumption is that elements are independent of each other, and inputs and outputs are also independent, like cats and dogs. However, in the real world, many elements are interconnected. For example, the stock market changes over time. A person says: "I love traveling, and my favorite place is Yunnan. I must visit __ if I get the chance." Here, the blank should obviously be filled with "Yunnan". This is because humans can infer this from the context, but it is difficult for a machine to do the same. Therefore, the current recurrent neural network was developed, and its essence is the ability to have memory like humans. Therefore, its output depends on both the current input and the memory.

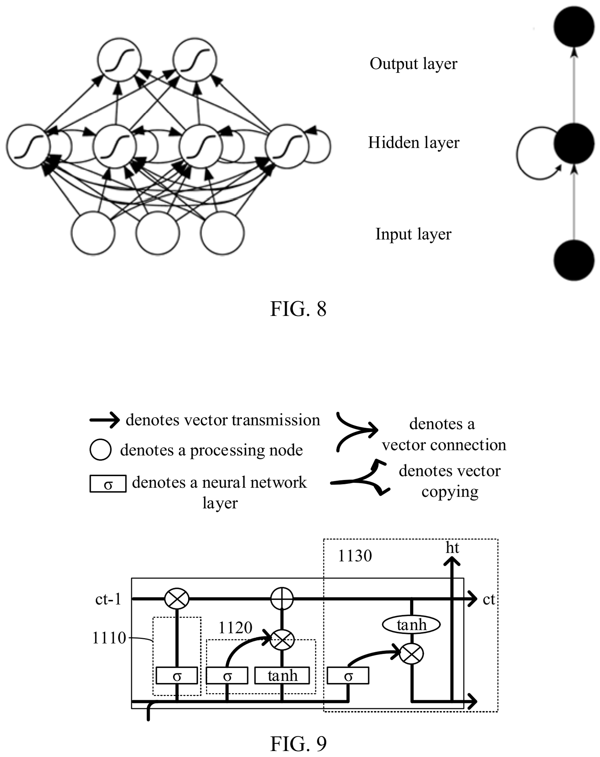

FIG. 8 is a schematic structural diagram of an RNN, where each circle may be considered as a unit, and each unit performs a same task. Therefore, the structure may be folded into a form shown in the left half of the diagram. In one sentence, an RNN is repetitive use of a single unit structure.

Currently, to solve the gradient exploding or vanishing problem of the RNN, a modification has been made on the basis of the RNN, resulting in the long short-term memory (long short-term memory, LSTM) model.

Referring to FIG. 9, a new memory unit cₜ (also referred to as a "cell state (cell state)") is introduced in the LSTM, and is used to perform linear cyclic information transfer and output information to an external state hₜ of the hidden layer. At each instant t, cₜ records historical information up to the current instant. Unlike the RNN, which considers only a most recent state, the memory unit determines which states should be retained and which states should be forgotten, thus overcoming drawbacks of the conventional RNN in long-term memory.

Still referring to FIG. 9, to implement selection of the states described above, a gating mechanism is introduced in the memory unit to control an information transfer path, similar to gates in a data circuit, where "0" indicates off and "1" indicates on. The memory unit includes a forget gate 910, an input gate 920, and an output gate 930. The forget gate is used to control how much information is required to be forgotten from the memory unit cₜ₋₁ at a previous instant, the input gate is used to control how much information in a candidate state $\hat{{c}_{t}}$ at a current instant is required to be stored, and the output gate is used to control how much information at the current instant is required to be output from the memory unit cₜ to the external state ht.

### Beam management based on the first model

The following describes the beam management scheme based on the first model with reference to both the training process and the prediction process of the first model.

It is assumed that the first model is used to predict an usable beam from a beam set A. Accordingly, in the training phase, a beam measurement result of a beam set B may be used as training data for the first model. In other words, the first model is trained based on the beam measurement result of the beam set B, such that the first model may predict the usable beam from the beam set A.

It should be noted that the beam measurement result of the beam set B may include a measurement result corresponding to an L1 measurement quantity, and/or indication information of a beam selected from the beam set B (for example, an identifier of a transmit beam, an identifier of a receive beam, or an identifier of a beam pair).

In some implementations, the training data may further include label information of the beam set A. The label information is used to indicate one or more of the following beams in the beam set A: an optimal transmit beam, an optimal receive beam, an optimal beam pair, a plurality of preferred transmit beams, a plurality of preferred receive beams, or a preferred beam pair.

In the prediction phase, the input to the first model may include a link quality measurement result (for example, the L1 measurement quantity) corresponding to a beam in the beam set A, and a prediction result output by the first model may include a target beam selected from the beam set A and link quality corresponding to the target beam.

In some implementations, the target beam may be one or more beams. For example, the target beam is one beam. The target beam may be an optimal beam or a preferred beam in the beam set A. For example, the target beam is a plurality of beams. The target beam may be a plurality of beams that meet a requirement in the beam set A, where the meeting the requirement may be understood as that link quality corresponding to the beams meets a requirement, for example, the link quality corresponding to the beams is greater than or equal to a threshold.

In some other implementations, the target beam may refer to one or more beam pairs, where each beam pair may include a receive beam or a transmit beam. For example, the target beam is one beam pair. The target beam may be an optimal beam pair or a preferred beam pair in the beam set A. For example, the target beam is a plurality of beam pairs. The target beam may be a plurality of beam pairs that meet a requirement in the beam set A, where the meeting the requirement may be understood as that link quality corresponding to the beam pairs meets a requirement, for example, the link quality corresponding to the beam pairs is greater than or equal to a threshold.

It should be noted that the link quality in embodiments of this application may be determined by using one or more measurement quantities described above. Certainly, the link quality in embodiments of this application may alternatively be determined based on another measurement quantity in a future communications system, which is not limited in embodiments of this application.

In addition, the link quality described above being determined based on one or more measurement quantities may be understood as that the link quality is obtained by processing the one or more measurement quantities. Certainly, the link quality may alternatively be a measurement quantity. This is not limited in embodiments of this application.

In some implementations, the beam set B and the beam set A may be different beam sets. In some implementations, the beam set B may be a subset of the beam set A. Accordingly, a relatively large quantity of beams (beams in the beam set A) may be predicted by measuring a small quantity of beams (beams in the beam set B). Compared to the scheme for performing beam selection by traversing all combinations as described above, this method facilitates reducing time required to perform the beam selection process. Certainly, in embodiments of this application, beams in the beam set B may be completely different from beams in the beam set A. For example, there is no intersection between the beam set B and the beam set A, but a beam direction corresponding to the beam set B may be similar to a beam direction corresponding to the beam set A.

In some other implementations, the beam set B may be completely the same as the beam set A.

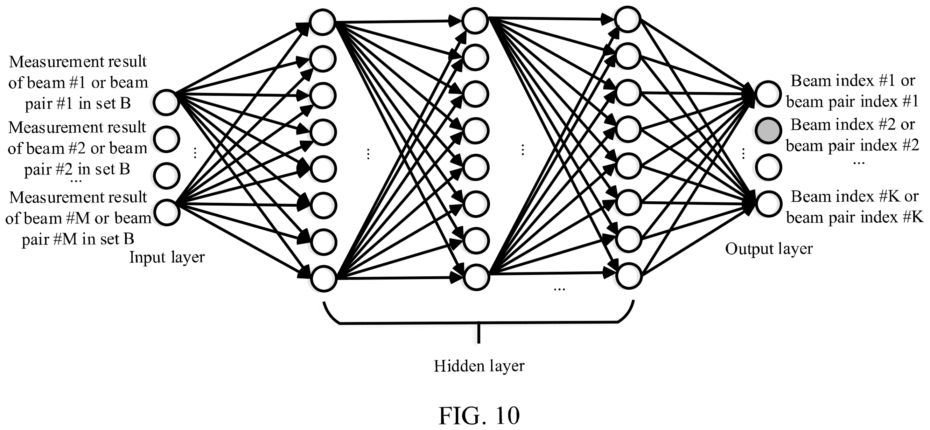

The following describes two application scenarios of beam prediction with reference to FIG. 10 to FIG. 12. The two application scenarios are downlink beam prediction in spatial domain and downlink beam prediction in time domain, respectively.

### Beam prediction in spatial domain

FIG. 10 shows an input-output relationship of the model. It may be considered that the model solves a multi-class classification problem. It may be seen from FIG. 10 that input of the model is measurement results of the beam set B, and output of the model is target beams selected from the beam set A. The target beams are optimal K beams or beam pairs from all predicted beams or beam pairs in the beam set A. The target beams may be indicated by indexes of the target beams.

The beam set B may be a partial subset of the beam set A, and the beam set A may be understood as a universal set. The partial subset may be a part of the universal set. Labels used by the model may be indexes of the optimal K beams or beam pairs measured in the universal set.

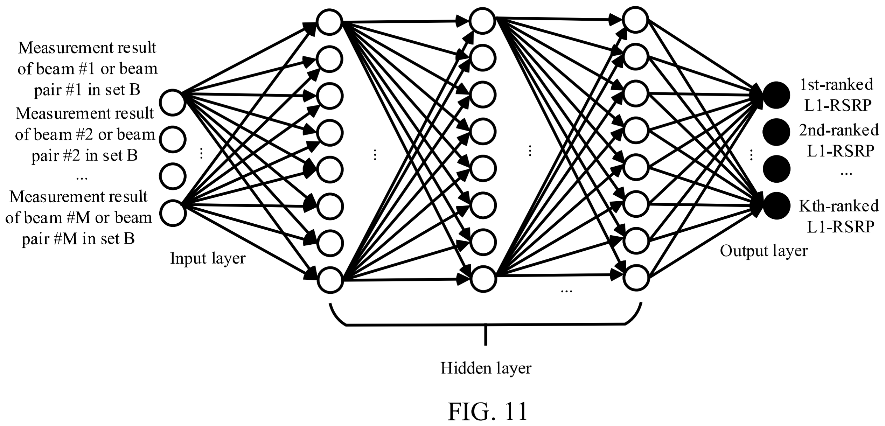

The model shown in FIG. 11 may be understood as a linear regression problem. The input-output relationship of the model is a relationship between L1-RSRP of the partial subset and L1-RSRP of the optimal K beams (beam pairs). The model in FIG. 11 is the same as the input part of the model in FIG. 10. A difference between them lies in that the output of the model in FIG. 11 is L1-RSRP corresponding to the optimal K beams (beam pairs). The labels used by the model are optimal K L1-RSRPs measured in the universal set, and indexes of the corresponding K beams (beam pairs).

### Beam prediction in time domain

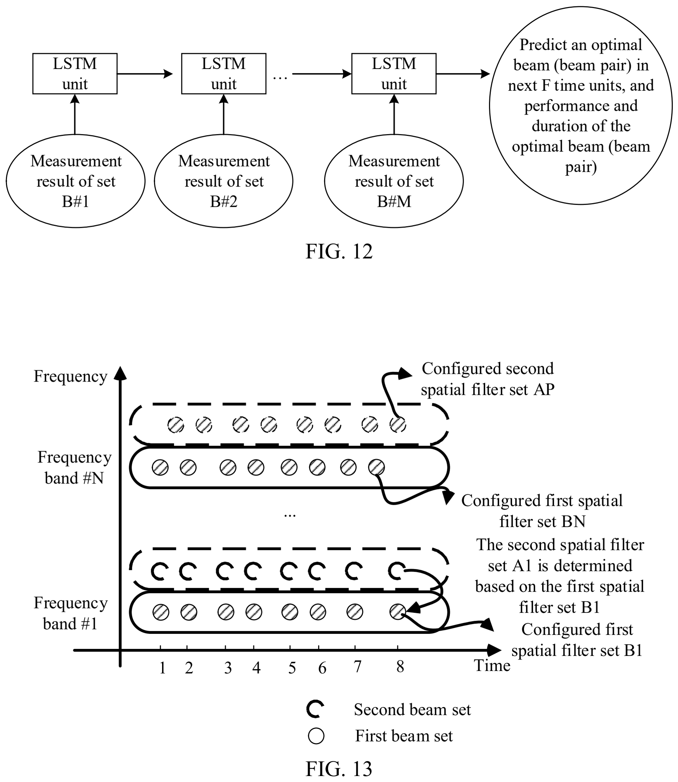

Beam prediction in time domain is performed by using a time-domain beam (beam pair) and performance thereof as a use case. A selected LSTM model is shown in FIG. 12. The LSTM model may be understood as using M instances (instances) extended in a temporal sequence as input, which is equivalent to a cascade of M basic LSTM units. Input of each LSTM unit is a measurement result of a beam set B#M.

It should be noted that an index of a beam (beam pair) in the beam set B#M may be implicitly input in a manner of a fixed correspondence with L1-RSRP. After the input of the M instances is completed, an optimal beam (beam pair) in next F time units, and performance and duration of the optimal beam (beam pair) may be predicted by the LSTM model.

It should be noted that the beam (beam pair) in embodiments of this application may represent a beam or a beam pair. The beam may refer to a transmit beam or a receive beam, and the beam pair may refer to a pair of transmit and receive beams. In addition, the beam may be interchanged with a spatial filter. The following uses a spatial filter as an example for description. It may be understood that a spatial filter below may represent a beam and/or a beam pair, unless being specifically described otherwise. The beam pair may also be referred to as a transmission and reception spatial filter.

For the model, the output of the model may be understood as inference or prediction. In embodiments of this application, inference (inference) and prediction (prediction) indicate a same meaning and may be interchanged.

In embodiments of this application, a process of using the model is mainly involved, that is, beam prediction is performed by using a trained model.

It may be learned from the foregoing description that spatial filter selection in both spatial domain and time domain may be performed through spatial filter prediction, so as to reduce overheads and a measurement delay of the terminal device. However, for spatial filter selection in frequency domain, if the terminal device performs measurement and reporting for each frequency band, the overheads and measurement delay of the terminal device are also increased.

In view of this, an embodiment of this application provides a spatial filter prediction method and an apparatus. Based on measurement results of spatial filter sets in some frequency bands, spatial filter prediction is performed on a spatial filter set in some other frequency bands, thereby reducing the overheads and measurement delay of the terminal device.

For example, spatial filter prediction may be performed on a second spatial filter set based on a measurement result of a first spatial filter set. The first spatial filter set may correspond to a first frequency band, and the second spatial filter set may correspond to a second frequency band.

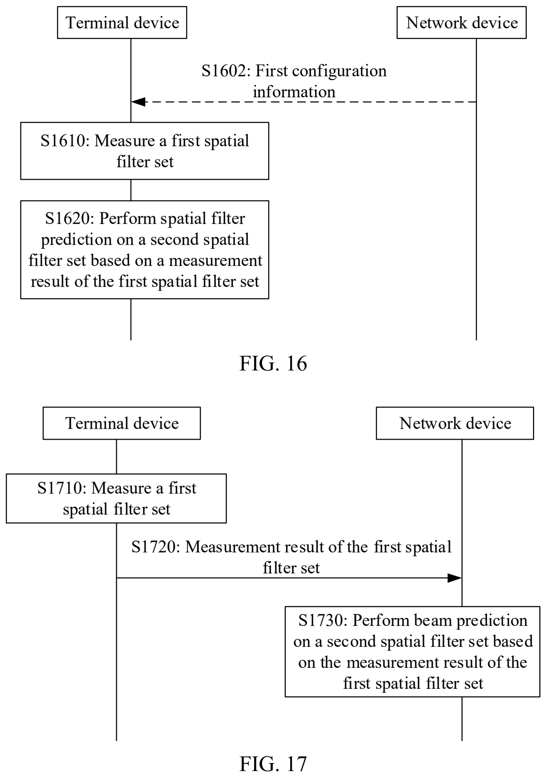

A device for performing spatial filter prediction on the second spatial filter set is not specifically limited in embodiments of this application. For example, the device may be a terminal device or a network device. Certainly, the device may alternatively be a third-party device. FIG. 16 shows a case in which the device is terminal device, and FIG. 17 shows a case in which the device is a network device. With reference to FIG. 16 and FIG. 17, the following describes in detail the two cases.

The first frequency band and the second frequency band are not specifically limited in embodiments of this application. In some embodiments, the first frequency band is different from the second frequency band. The first frequency band being different from the second frequency band may mean that the first frequency band is completely different from the second frequency band, or that the first frequency band is not entirely the same as the second frequency band. For example, the first frequency band and the second frequency band are completely non-overlapping. For another example, the first frequency band partially overlaps the second frequency band, and partially non-overlaps the second frequency band. For another example, there is an inclusion relationship between the first frequency band and the second frequency band. For example, a frequency band range of the second frequency band includes a frequency band range of the first frequency band.

There are a plurality of manners of determining the first frequency band and the second frequency band, which is not specifically limited in embodiments of this application. For example, the first frequency band and the second frequency band may be determined based on a component carrier (component carrier, CC) or a bandwidth part (bandwidth Part, BWP), that is, the first frequency band and the second frequency band may be in the unit of CC or BWP. For example, the first frequency band and the second frequency band may be different CCs, or the first frequency band and the second frequency band may be different BWPs. Certainly, the first frequency band and the second frequency band may alternatively be in other units. For example, the first frequency band and the second frequency band may be in the unit of FR, that is, the first frequency band is an FR 1, and the second frequency band is an FR 2.

The first spatial filter set corresponding to the first frequency band may refer to that the first spatial filter set is a spatial filter set corresponding to the first frequency band. The first spatial filter set may include a transmission spatial filter (such as a downlink transmission spatial filter), or the first spatial filter set may include a transmission and reception spatial filter (such as a downlink transmission and reception spatial filter). For ease of description, the following uses a spatial filter as an example for description. A quantity of spatial filters included in the first spatial filter set is not specifically limited in embodiments of this application, and the first spatial filter set may include any positive integer quantity of spatial filters.

The second spatial filter set corresponding to the second frequency band may refer to that the second spatial filter set is a spatial filter set corresponding to the second frequency band. The second spatial filter set may include a transmission spatial filter, or the second spatial filter set may include a transmission and reception spatial filter. For ease of description, the following uses a spatial filter as an example for description. A quantity of spatial filters included in the second spatial filter set is not specifically limited in embodiments of this application, and the second spatial filter set may include any positive integer quantity of spatial filters.

A spatial filter in the first spatial filter set may be indicated by using a downlink reference signal. The downlink reference signal may include, for example, an SSB or a CSI-RS. In other words, the first spatial filter set may include an SSB or a CSI-RS. A spatial filter in the second spatial filter set may be indicated by using a downlink reference signal. The downlink reference signal may include, for example, an SSB or a CSI-RS. In other words, the second spatial filter set may include an SSB or a CSI-RS.

The first spatial filter set is a spatial filter set that is required to be measured, and the second spatial filter set is a spatial filter set that is not required to be measured. In some embodiments, the first spatial filter set may be referred to as a measurement set, and the second spatial filter set may be referred to as a prediction set.

The first spatial filter set may be measured by the terminal device. A manner in which the terminal device measures the first spatial filter set is similar to the manner described above. For content not described in detail, reference may be made to the foregoing description. The terminal device may measure the spatial filter in the first spatial filter set to obtain a measurement result of the first spatial filter set. If the spatial filter in the first spatial filter set includes a transmission spatial filter, the terminal device may measure the transmission spatial filter. If the spatial filter in the first spatial filter set includes a transmission and reception spatial filter, the terminal device may measure the transmission and reception spatial filter. Certainly, the terminal device may measure only the transmission spatial filter in the transmission and reception spatial filter. Measuring a spatial filter may refer to measuring a reference signal on the spatial filter. For example, the terminal device may measure an SSB or a CSI-RS on the spatial filter to obtain a corresponding measurement result.

The measurement result of the first spatial filter set may include link quality corresponding to the spatial filter. The measurement result may be an L1 measurement result. For example, the measurement result may include one or more of RSRP or SINR. The measurement result may be an L1 measurement result. For example, the measurement result may include one or more of L1-RSRP or L1-SINR.

The performing spatial filter prediction on the second spatial filter set may refer to determining a prediction result of the second spatial filter set. The prediction result may include one or more of the following: an optimal spatial filter, an optimal transmission and reception spatial filter, link quality corresponding to an optimal spatial filter, or link quality corresponding to an optimal transmission and reception spatial filter. The optimal spatial filter may be represented by index information of the optimal spatial filter, and the optimal transmission and reception spatial filter may be represented by index information of the optimal transmission and reception spatial filter. An index of a spatial filter may include an index of an SSB and/or an index of a CSI-RS resource. An index of a transmission and reception spatial filter may include an index of an SSB and/or an index of a CSI-RS resource.

The link quality may also be referred to as spatial filter quality. The link quality may include one or more of RSRP or SINR. The link quality may be L1 link quality. For example, the link quality may include one or more of L1-RSRP or L1-SINR.

For example, the prediction result may include index information of the optimal spatial filter. For another example, the prediction result may include the link quality corresponding to the optimal spatial filter. For another example, the prediction result may include the index information of the optimal spatial filter and the link quality corresponding to the optimal spatial filter. For another example, the prediction result may include index information of the optimal transmission and reception spatial filter. For another example, the prediction result may include the link quality corresponding to the optimal transmission and reception spatial filter. For another example, the prediction result may include the index information of the optimal transmission and reception spatial filter and the link quality corresponding to the optimal transmission and reception spatial filter.

A quantity of spatial filters included in the optimal spatial filter is not specifically limited in embodiments of this application. The optimal spatial filter may refer to one or more optimal spatial filters. For example, the optimal spatial filter may refer to K optimal spatial filters, where K ≥ 1.

A quantity of transmission and reception spatial filters included in the optimal transmission and reception spatial filter is not specifically limited in embodiments of this application. The optimal transmission and reception spatial filter may refer to one or more optimal transmission and reception spatial filters. For example, the optimal transmission and reception spatial filter may refer to Z optimal transmission and reception spatial filters, where Z ≥ 1.

Certainly, in some embodiments, the prediction result may also include information about a spatial filter that meets a condition. The spatial filter that meets the condition may include a spatial filter whose link quality is greater than a preset threshold. For example, the information about the spatial filter that meets the condition may include information about a preferred spatial filter. For example, the prediction result may include one or more of the following: a preferred spatial filter, a preferred transmission and reception spatial filter, link quality corresponding to a preferred spatial filter, or link quality corresponding to a preferred transmission and reception spatial filter.

A quantity of first spatial filter sets and a quantity of second spatial filter sets are not specifically limited in embodiments of this application. There may be one or more first spatial filter sets, and there may be one or more second spatial filter sets. For example, spatial filter prediction may be performed on a plurality of second spatial filter sets by using measurement results of a plurality of first spatial filter sets, or spatial filter prediction may be performed on one second spatial filter set by using measurement results of a plurality of first spatial filter sets, or spatial filter prediction may be performed on one second spatial filter set by using a measurement result of one first spatial filter set, or spatial filter prediction may be performed on a plurality of second spatial filter sets by using a measurement result of one first spatial filter set.

The following describes the first spatial filter set and the second spatial filter set by using FIG. 13 as an example. In FIG. 13, a frequency band corresponding to the first spatial filter set is represented by a solid line, and a frequency band corresponding to the second spatial filter set is represented by a dashed line. FIG. 13 shows first spatial filter sets at a plurality of instants and second spatial filter sets at a plurality of instants. The terminal device may measure the first spatial filter sets periodically. A specific instant (for example, an instant 8) is mainly described.

The frequency band corresponding to the first spatial filter set is adjacent to the frequency band corresponding to the second spatial filter set shown in FIG. 13, but embodiments of this application are not limited thereto. The first frequency band and the second frequency band may alternatively be in different frequency band ranges (frequency range, FR). For example, the first frequency band is located in an FR 1, and the second frequency band is located in an FR 2. For another example, the first frequency band and the second frequency band may be located in different frequency bands (band) within an FR, for example, the first frequency band is located in a band #257, and the second frequency band is located in a band #260.

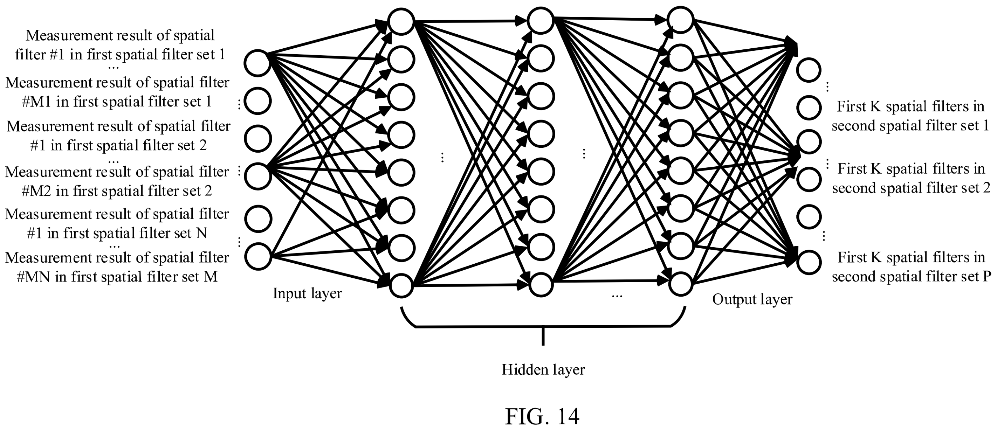

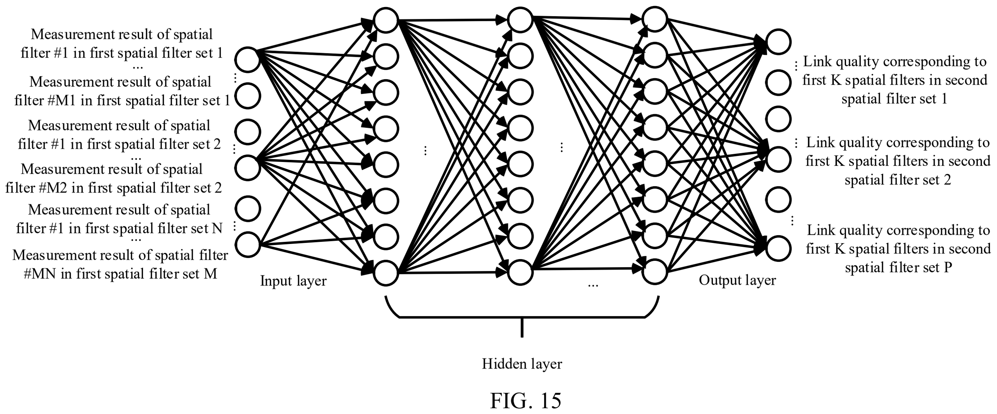

The spatial filter prediction on the second spatial filter set may be implemented by using a first model. For example, a measurement result of the first spatial filter set may be used as input of the first model, and output of the first model is a prediction result of the second spatial filter set, as shown in FIG. 14 and FIG. 15.

The first model may be the neural network model described above. The first model may be an AI model or an ML model. The first model may be based on one or more of model structures such as a DNN, a CNN, or an RNN. The RNN may include, for example, an LSTM and a GRU.

FIG. 14 and FIG. 15 are used as examples. FIG. 14 shows a case in which a prediction result includes an optimal spatial filter. FIG. 15 shows a case in which a prediction result includes link quality corresponding to the optimal spatial filter.

Referring to FIG. 14, input of the first model includes measurement results of M spatial filters in each of N first spatial filter sets. That is, the input of the first model may include a measurement result of a spatial filter #1 in a first spatial filter set 1, ..., a measurement result of a spatial filter #M1 in the first spatial filter set 1, a measurement result of a spatial filter #1 in a first spatial filter set 2, ..., a measurement result of a spatial filter #M2 in the first spatial filter set 2, ..., a measurement result of a spatial filter #1 in a first spatial filter set N, ..., a measurement result of a spatial filter #MN in the first spatial filter set N.

The output of the first model includes first K spatial filters in each of P second spatial filter sets. That is, the output of the first model may include first K spatial filters in a second spatial filter set 1, first K spatial filters in a second spatial filter set 2, ..., first K spatial filters in a second spatial filter set P.

Referring to FIG. 15, the input of the first model includes measurement results of M spatial filters in each of the N first spatial filter sets, that is, the input of the first model in FIG. 15 is the same as the input of the first model in FIG. 14. The output of the first model includes link quality corresponding to first K spatial filters in each of the P second spatial filter sets. That is, the output of the first model may include link quality corresponding to first K spatial filter in a second spatial filter set 1, link quality corresponding to first K spatial filters in a second spatial filter set 2, ..., link quality corresponding to first K spatial filters in a second spatial filter set P.

The following describes the spatial filter prediction method in embodiments of this application with reference to FIG. 16 and FIG. 17 separately. FIG. 16 shows a scheme for performing spatial filter prediction on a second spatial filter set by a terminal device. FIG. 17 shows a scheme for performing spatial filter prediction on a second spatial filter set by a network device.

Referring to FIG. 16, the method shown in FIG. 16 includes step S1610 and step S1620.

In step S1610, the terminal device measures the first spatial filter set.

In step S1620, the terminal device performs spatial filter prediction on a second spatial filter set based on a measurement result of the first spatial filter set.

The first spatial filter set and the second spatial filter set may be configured by the network device for the terminal device. For example, referring to FIG. 16, in step S1602, the network device may transmit first configuration information to the terminal device. The first configuration information may be used to configure the first spatial filter set and/or the second spatial filter set. FIG. 13 is used as an example. The network device may configure a first spatial filter set BN and a second spatial filter set AP for the terminal device.

The first spatial filter set and the second spatial filter set may be configured by using the same configuration information, or may be configured by using different configuration information. For example, the network device may transmit configuration information 1 to the terminal device, and the configuration information 1 is used to configure the first spatial filter set. The network device may transmit configuration information 2 to the terminal device, and the configuration information 2 is used to configure the second spatial filter set. For another example, the network device may transmit configuration information 3 to the terminal device, and the configuration information 3 may be used to configure the first spatial filter set and the second spatial filter set.

The first spatial filter set and/or the second spatial filter set may be determined based on a capability of the terminal device. In some embodiments, before the network device transmits the first configuration information to the terminal device, the terminal device may transmit first capability information to the network device. The first capability information may be used to determine the first spatial filter set and/or the second spatial filter set.

The first capability information may include a measurement capability and/or a prediction capability. For example, the first capability information may include one or more of the following: whether the terminal device supports spatial filter measurement, whether the terminal device supports spatial filter prediction, a quantity of spatial filters supported for measurement, or a quantity of spatial filters supported for prediction.

In some embodiments, the first capability information may include one or more of the following: a quantity of spatial filter sets that are measurable, a quantity of spatial filter sets that are predictable, a quantity of spatial filters that are measurable, or a quantity of spatial filters that are predictable.

The quantity of spatial filter sets that are measurable may refer to a quantity of spatial filter sets corresponding to frequency bands that can be measured. For example, a frequency band is a CC/BWP. The quantity of spatial filter sets that are measurable may refer to a quantity of spatial filter sets corresponding to a maximum quantity of CCs/BWPs that can be measured.

The quantity of spatial filter sets that are predictable may refer to a quantity of spatial filter sets corresponding to frequency bands that can be predicted. For example, a frequency band is a CC/BWP. The quantity of spatial filter sets that are predictable may refer to a quantity of spatial filter sets corresponding to a maximum quantity of CCs/BWPs that can be predicted.

The quantity of spatial filters that are measurable may include a total quantity of spatial filters that can be measured, or a quantity of spatial filters that can be measured in one spatial filter set. The quantity of spatial filters may refer to a quantity of SSBs and/or a quantity of CSI-RS resources. For example, the frequency band is a CC/BWP. The quantity of spatial filters that can be measured in one spatial filter set may refer to a maximum quantity of SSBs and/or a maximum quantity of CSI-RS resources that can be measured in a spatial filter set corresponding to each CC/BWP.

The quantity of spatial filters that are predictable may include a total quantity of spatial filters that can be predicted, or a quantity of spatial filters that can be predicted in one spatial filter set. The quantity of spatial filters may refer to a quantity of SSBs and/or a quantity of CSI-RS resources. For example, the frequency band is a CC/BWP. The quantity of spatial filters that can be predicted in one spatial filter set may refer to a maximum quantity of SSBs and/or a maximum quantity of CSI-RS resources that can be predicted in a spatial filter set corresponding to each CC/BWP.

A manner of configuring the first spatial filter set by the network device is not specifically limited in embodiments of this application. For example, the network device may configure only one spatial filter set. The spatial filter set is the first spatial filter set, and the terminal device measures the spatial filter set. For another example, the network device may configure a plurality of spatial filter sets for the terminal device, and the first spatial filter set is one of the plurality of spatial filter sets. After the plurality of spatial filter sets are configured, the network device may transmit first information to the terminal device. The first information is used to activate one of the plurality of spatial filter sets, and the terminal device may measure the one spatial filter set activated. The network device may activate any one of the plurality of spatial filter sets, or the network device may select, according to an actual deployment situation and an antenna configuration situation, which spatial filter set to activate. The activated spatial filter set may be the first spatial filter set. A manner of activating the first spatial filter set by the network device is not specifically limited in embodiments of this application. For example, the network device may activate the first spatial filter set by using a MAC CE.

A manner of configuring the second spatial filter set by the network device is not specifically limited in embodiments of this application. For example, the network device may configure only one spatial filter set. The spatial filter set is the second spatial filter set, and the terminal device measures the spatial filter set. For another example, the network device may configure a plurality of spatial filter sets for the terminal device, and the second spatial filter set is one of the plurality of spatial filter sets. After the plurality of spatial filter sets are configured, the network device may transmit second information to the terminal device. The second information is used to activate one of the plurality of spatial filter sets, and the terminal device may measure the one spatial filter set activated. The network device may activate any one of the plurality of spatial filter sets, or the network device may select, according to an actual deployment situation and an antenna configuration situation, which spatial filter set to activate. The activated spatial filter set may be the second spatial filter set. A manner of activating the second spatial filter set by the network device is not specifically limited in embodiments of this application. For example, the network device may activate the second spatial filter set by using a MAC CE.

In some embodiments, the second spatial filter set may be determined based on the first spatial filter set, or in other words, the second spatial filter set is associated with the first spatial filter set. As shown in FIG. 13, a spatial filter set B1 is associated with a spatial filter set A1.

A manner of determining the second spatial filter set is not specifically limited in embodiments of this application. For example, the second spatial filter set may be the same as the first spatial filter set. In other words, spatial filters in the second spatial filter set may be the same as spatial filters in the first spatial filter set. In other words, indexes of spatial filters in the second spatial filter set may be the same as indexes of spatial filters in the first spatial filter set. For another example, alternatively, spatial filters in the second spatial filter set may be some of spatial filters in the first spatial filter set.

If the second spatial filter set is determined based on the first spatial filter set, the network device may configure only the first spatial filter set. The second spatial filter set may be indicated to the terminal device in an indication manner. For example, the network device may transmit indication information to the terminal device. The indication information is used to indicate that the second spatial filter set is the same as the first spatial filter set. In some embodiments, the second spatial filter set may alternatively be determined by the terminal device. For example, the terminal device may determine the second spatial filter set based on the first spatial filter set.

If there are a plurality of first spatial filter sets, the network device may indicate a first spatial filter set based on which the second spatial filter set is determined. If there are a plurality of second spatial filter sets, the network device may also indicate first spatial filter sets based on which respective second spatial filter sets is determined. Different second spatial filter sets may be determined based on a same first spatial filter set, or may be determined based on different first spatial filter sets. The first spatial filter set on which the second spatial filter set is based may be a spatial filter set that is not subjected to spatial filter prediction in spatial domain.

For example, it is assumed that the first spatial filter set includes N spatial filter sets, denoted as a set Bn, where 1 ≤ n ≤ N. It is assumed that the second spatial filter set includes P spatial filter sets, denoted as a set Ap, where 1 ≤ p ≤ P. The network device may indicate that the set A1 is the same as the set B1, the set A2 is the same as the set B2, the set A3 is the same as the set B3, and so on. Certainly, the network device may alternatively indicate that the set A1 and the set A2 are the same as the set B1.

If the second spatial filter set is determined based on the first spatial filter set, the network device may configure only the first spatial filter set but not the second spatial filter set, thereby reducing signalling overheads.

If there are a plurality of second spatial filter sets, some of the plurality of second spatial filter sets may be configured by the network device, and some of the spatial filter sets may be determined based on the first spatial filter set. This is not specifically limited in embodiments of this application.

The foregoing describes the case in which the second spatial filter set is determined based on the first spatial filter set. Certainly, in some embodiments, the first spatial filter set may alternatively be determined based on the second spatial filter set. A specific determining manner is similar to the foregoing manner. For brevity, details are not described herein again.

In some embodiments, the terminal device may transmit a prediction result of the second spatial filter set to the network device. The network device may indicate a spatial filter to the terminal device based on the prediction result of the second spatial filter set.

If there are a plurality of second spatial filter sets, prediction results of the plurality of second spatial filter sets may be carried in a same message, or may be carried in different messages. A quantity P of second spatial filter sets is used as an example. Prediction results of the P second spatial filter sets may be carried in a first message, or prediction results of the P second spatial filter sets may be carried in different messages.

If the prediction results of the plurality of second spatial filter sets are carried in the first message, the first message may further include indexes of the second spatial filter sets. The indexes of the second spatial filter sets may be used to indicate a frequency band to which the second spatial filter sets belong. The indexes of the second spatial filter sets may alternatively be a frequency band index. For example, the frequency band is a CC. The index of the second spatial filter set may be a serving cell index (serving cell index), which is used to mark a CC to which the second spatial filter set belongs. For example, the frequency band is a BWP. The indexes of the second spatial filter sets may be a BWP ID, which is used to mark a BWP to which the second spatial filter sets belong.

It may be learned from FIG. 4 that a downlink spatial filter sweeping process may include a P1 process, a P2 process, or a P3 process. For the P1 process, the terminal device may predict a transmission and reception spatial filter. For the P2 process, the terminal device may predict a downlink transmission spatial filter. For the P3 process, the terminal device predicts a downlink reception spatial filter. The following describes the three cases separately.

If the terminal device predicts a downlink reception spatial filter, the terminal device may not report a prediction result, and the network device may also not indicate a reception spatial filter. After receiving a transmission spatial filter indicated by the network device, the terminal device may perform downlink reception by using a predicted reception spatial filter corresponding to the transmission spatial filter.

In some embodiments, if the terminal device measures the transmission spatial filter indicated by the network device, as described in the P2 process above, the prediction results of the second spatial filter sets may include an optimal spatial filter and/or link quality corresponding to an optimal spatial filter. If the terminal device measures a transmission and reception spatial filter, as described in the P1 process above, the prediction results of the second spatial filter sets may include an optimal transmission and reception spatial filter and/or link quality corresponding to an optimal transmission and reception spatial filter.

In some embodiments, the prediction results of the second spatial filter sets may be carried in a CSI field.

The following describes reporting information of the second spatial filter set by using an example in which the prediction result of the second spatial filter set includes optimal K spatial filters and link quality corresponding to the optimal K spatial filters. The prediction results of the second spatial filter sets may be as shown in Table 1.

Referring to Table 1, the terminal device may report prediction results of P second spatial filter sets, and the P second spatial filter sets may be indicated by using serving cell indexes or BWP IDs. Referring to Table 1, for the P second spatial filter sets, the CSI field may include a serving cell index and/or a BWP ID #1, a serving cell index and/or a BWP ID #2, a serving cell index and/or a BWP ID #3, ..., a serving cell index and/or a BWP ID #P.

For example, the optimal spatial filter includes four optimal spatial filters. The terminal device may report, for each second spatial filter set, four optimal spatial filters and link quality corresponding to the four optimal spatial filters. The second spatial filter set #1 is used as an example. The first message (such as the CSI field) may include a spatial filter #1, a spatial filter #2, a spatial filter #3, a spatial filter #4, link quality corresponding to the spatial filter #1, link quality corresponding to the spatial filter #2, link quality corresponding to the spatial filter #3, and link quality corresponding to the spatial filter #4. The spatial filter #x may be represented by a CSI-RS resource indicator (CSI-RS resource indicator, CRI) or an SSB resource indicator (resource indicator, SSBRI) #x. Link quality corresponding to the spatial filter #x may be represented by L1-RSRP/L1-SINR#x, where a value of x is 1, 2, 3, or 4.

When reporting link quality corresponding to spatial filters, to reduce overheads, the terminal device may use a differential reporting manner. For example, based on the link quality corresponding to the optimal spatial filter, link quality corresponding to other spatial filters may be reported.

The second spatial filter set #1 is used as an example. The optimal spatial filter may be the spatial filter #1, and corresponding link quality is L1-RSRP/L1-SINR#1. When reporting the link quality corresponding to the spatial filter #2, the terminal device may report a difference between L1-RSRP/L1-SINR#2 and L1-RSRP/L1-SINR#1. When reporting the link quality corresponding to the spatial filter #3, the terminal device may report a difference between L1-RSRP/L1-SINR#3 and L1-RSRP/L1-SINR#1. When reporting the link quality corresponding to the spatial filter #4, the terminal device may report a difference between L1-RSRP/L1-SINR#4 and L1-RSRP/L1-SINR#1.

**Table 1**

| **Quantity of CSI reports** | **CSI field** |
|---|---|
| CSI report #n | Serving cell index and/or a BWP ID #1 |
| | Spatial filter #1 |
| | Spatial filter #2 |
| | Spatial filter #3 |
| | Spatial filter #4 |
| | Link quality corresponding to the spatial filter #1 |
| | Difference between link quality corresponding to the spatial filter #2 and the link quality corresponding to the spatial filter #1 |
| | Difference between link quality corresponding to the spatial filter #3 and the link quality corresponding to the spatial filter #1 |
| | Difference between link quality corresponding to the spatial filter #4 and the link quality corresponding to the spatial filter #1 |
| | Serving cell index and/or a BWP ID #2 |
| | Spatial filter #1 |
| | Spatial filter #2 |
| | Spatial filter #3 |
| | Spatial filter #4 |
| | Link quality corresponding to the spatial filter #1 |
| | Difference between link quality corresponding to the spatial filter #2 and the link quality corresponding to the spatial filter #1 |
| | Difference between link quality corresponding to the spatial filter #3 and the link quality corresponding to the spatial filter #1 |
| | Difference between link quality corresponding to the spatial filter #4 and the link quality corresponding to the spatial filter #1 |
| | ... |
| | Serving cell index and/or a BWP ID #P |
| | Spatial filter #1 |
| | Spatial filter #2 |
| | Spatial filter #3 |
| | Spatial filter #4 |
| | Link quality corresponding to the spatial filter #1 |
| | Difference between link quality corresponding to the spatial filter #2 and the link quality corresponding to the spatial filter #1 |
| | Difference between link quality corresponding to the spatial filter #3 and the link quality corresponding to the spatial filter #1 |
| | Difference between link quality corresponding to the spatial filter #4 and the link quality corresponding to the spatial filter #1 |

Table 1 shows an aggregated reporting manner for spatial filters. In some embodiments, to reduce load, the prediction results of the P second spatial filter sets may alternatively be reported separately. For example, the prediction results of the P second spatial filter sets may be reported in P reports, each reporting a prediction result of one spatial filter set. Certainly, the prediction results of the P spatial filter sets may alternatively be reported in W reports, where W is greater than 1 and less than P.

If the terminal device reports a prediction result of a spatial filter, the network device may indicate a downlink transmission spatial filter to the terminal device. For example, the network device may use a spatial filter indication based on a TCI state. That is, the network device may transmit the TCI state to the terminal device. The TCI state may be used to indicate the downlink transmission spatial filter used by the network device.

For a spatial filter indication for a single frequency band, one TCI state is applicable to one frequency band. For a multiband common spatial filter indication, one TCI state is applicable to a plurality of frequency bands. The frequency band herein may be a CC or a BWP.

In some embodiments, to reduce signalling overheads caused for providing a spatial filter indication by the network device, the network device may indicate spatial filters in a plurality of frequency bands by using one piece of indication information. The plurality of frequency bands may be associated with each other. A quantity of the plurality of frequency bands may be any integer greater than or equal to 2. The plurality of frequency bands may include a frequency band corresponding to the first spatial filter set and a frequency band corresponding to the second spatial filter set, or each of the plurality of frequency bands is a frequency band corresponding to the first spatial filter set, or each of the plurality of frequency bands is a frequency band corresponding to the second spatial filter set.

For example, the plurality of frequency bands may include the frequency band corresponding to the first spatial filter set and the frequency band corresponding to the second spatial filter set. The network device may transmit second indication information to the terminal device. The second indication information is used to indicate a second spatial filter. The second spatial filter includes a spatial filter in the first spatial filter set and a spatial filter in the second spatial filter set. The second spatial filter may be determined based on a measurement result of the first spatial filter set and a prediction result of the second spatial filter set.

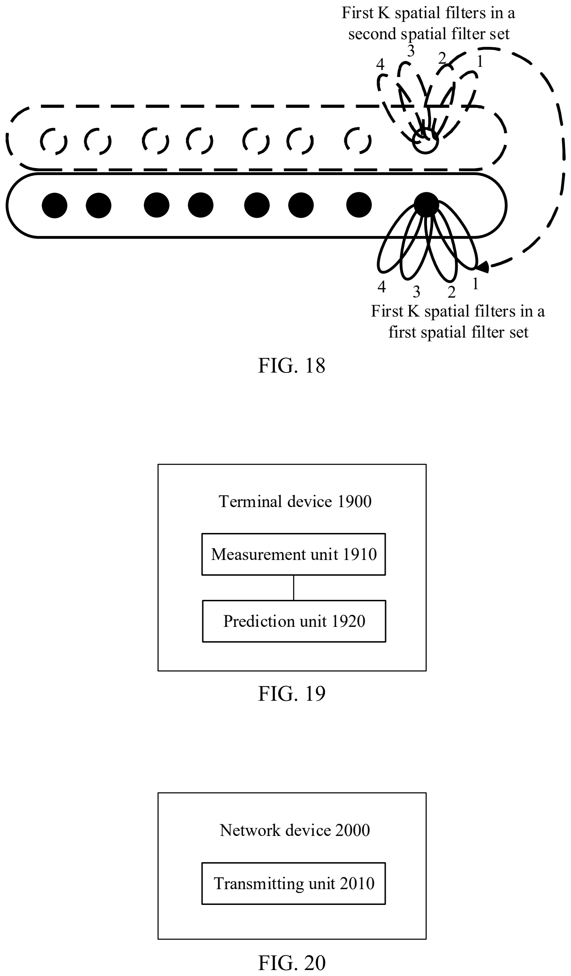

FIG. 18 is used as an example. It is assumed that optimal K spatial filters in the first spatial filter set are associated with optimal K spatial filters in the second spatial filter set, where a spatial filter 1 in the first spatial filter set is associated with a spatial filter 2 in the second spatial filter set. After the network device transmits the second indication information to the terminal device, the terminal device may determine the spatial filter 1 in the first spatial filter set and the spatial filter 2 in the second spatial filter set based on the second indication information. For the terminal device, it may be considered that the network device uses the spatial filter #1 for downlink transmission in the first frequency band, and the network device uses the spatial filter #2 for downlink transmission in the second frequency band.

The following describes reporting information of the second spatial filter set by using an example in which the prediction result of the second spatial filter set includes optimal K transmission and reception spatial filters and link quality corresponding to the optimal K transmission and reception spatial filters. The prediction results of the second spatial filter sets may be as shown in Table 2.

Referring to Table 2, the terminal device may report prediction results of P second spatial filter sets, and the P second spatial filter sets may be indicated by using serving cell indexes or BWP IDs. Referring to Table 2, for the P second spatial filter sets, the CSI field may include a serving cell index and/or a BWP ID #1, a serving cell index and/or a BWP ID #2, a serving cell index and/or a BWP ID #3, ..., a serving cell index and/or a BWP ID #P.

The terminal device may report, for each second spatial filter set, optimal four transmission and reception spatial filters and link quality corresponding to the optimal four transmission and reception spatial filters. The second spatial filter set #1 is used as an example. The CSI field may include a transmission and reception spatial filter #1, a transmission and reception spatial filter #2, a transmission and reception spatial filter #3, a transmission and reception spatial filter #4, link quality corresponding to the transmission and reception spatial filter #1, link quality corresponding to the transmission and reception spatial filter #2, link quality corresponding to the transmission and reception spatial filter #3, and link quality corresponding to the transmission and reception spatial filter #4. The transmission and reception spatial filter #x may be represented by a beam pair, a CSI, or SSBRI#x. Link quality corresponding to the transmission and reception spatial filter #x may be represented by L1-RSRP/L1-SINR#x, where a value of x is 1, 2, 3, or 4.

When reporting link quality corresponding to transmission and reception spatial filters, to reduce overheads, the terminal device may use a differential reporting manner. For example, based on the link quality corresponding to the optimal transmission and reception spatial filter, link quality corresponding to other transmission and reception spatial filters may be reported.

The second spatial filter set #1 is used as an example. The optimal transmission and reception spatial filter may be the transmission and reception spatial filter #1, and corresponding link quality is L1-RSRP/L1-SINR#1. When reporting the link quality corresponding to the transmission and reception spatial filter #2, the terminal device may report a difference between L1-RSRP/L1-SINR#2 and L1-RSRP/L1-SINR#1. When reporting the link quality corresponding to the transmission and reception spatial filter #3, the terminal device may report a difference between L1-RSRP/L1-SINR#3 and L1-RSRP/L1-SINR#1. When reporting the link quality corresponding to the transmission and reception spatial filter #4, the terminal device may report a difference between L1-RSRP/L1-SINR#4 and L1-RSRP/L1-SINR#1.

**Table 2**

| **Quantity of CSI reports** | **CSI field** |
|---|---|
| CSI report #n | Serving cell index and/or a BWP ID #1 |
| | Transmission and reception spatial filter #1 |
| | Transmission and reception spatial filter #2 |
| | Transmission and reception spatial filter #3 |
| | Transmission and reception spatial filter #4 |
| | Link quality corresponding to the transmission and reception spatial filter #1 |
| | Difference between link quality corresponding to the transmission and reception spatial filter #2 and the link quality corresponding to the transmission and reception spatial filter #1 |
| | Difference between link quality corresponding to the transmission and reception spatial filter #3 and the link quality corresponding to the transmission and reception spatial filter #1 |
| | Difference between link quality corresponding to the transmission and reception spatial filter #4 and the link quality corresponding to the transmission and reception spatial filter #1 |
| | Serving cell index and/or a BWP ID #2 |
| | Transmission and reception spatial filter #1 |
| | Transmission and reception spatial filter #2 |
| | Transmission and reception spatial filter #3 |
| | Transmission and reception spatial filter #4 |
| | Link quality corresponding to the transmission and reception spatial filter #1 |
| | Difference between link quality corresponding to the transmission and reception spatial filter #2 and the link quality corresponding to the transmission and reception spatial filter #1 |
| | Difference between link quality corresponding to the transmission and reception spatial filter #3 and the link quality corresponding to the transmission and reception spatial filter #1 |
| | Difference between link quality corresponding to the transmission and reception spatial filter #4 and the link quality corresponding to the transmission and reception spatial filter #1 |
| | ... |
| | Serving cell index and/or a BWP ID #P |
| | Transmission and reception spatial filter #1 |
| | Transmission and reception spatial filter #2 |
| | Transmission and reception spatial filter #3 |
| | Transmission and reception spatial filter #4 |
| | Link quality corresponding to the transmission and reception spatial filter #1 |
| | Difference between link quality corresponding to the transmission and reception spatial filter #2 and the link quality corresponding to the transmission and reception spatial filter #1 |
| | Difference between link quality corresponding to the transmission and reception spatial filter #3 and the link quality corresponding to the transmission and reception spatial filter #1 |
| | Difference between link quality corresponding to the transmission and reception spatial filter #4 and the link quality corresponding to the transmission and reception spatial filter #1 |

Table 2 shows an aggregated reporting manner for transmission and reception spatial filters. In some embodiments, to reduce load, the prediction results of the P second spatial filter sets may alternatively be reported separately. For example, the prediction results of the P second spatial filter sets may be reported in P reports, each reporting a prediction result of one spatial filter set. Certainly, the prediction results of the P transmission and reception spatial filters may alternatively be reported in W reports, where W is greater than 1 and less than P.

If the terminal device measures a transmission and reception spatial filter, and/or reports a prediction result of the transmission and reception spatial filter (as shown in Table 2), the network device may indicate the transmission and reception spatial filter to the terminal device by providing a spatial filter indication for the terminal device. That is, in addition to indicating a downlink transmission spatial filter to the terminal device, the network device may directly indicate a reception spatial filter to be used by the terminal device. In this way, an operation of the terminal device may be simplified, without relying on implementation of the terminal device for determining the reception spatial filter.

For example, the network device may transmit the first indication information to the terminal device. The first indication information may be used to indicate a first transmission and reception spatial filter. After receiving the first transmission and reception spatial filter, the terminal device may determine a reception spatial filter for downlink reception based on the first transmission and reception spatial filter. For example, the terminal device may use the reception spatial filter, corresponding to the first transmission and reception spatial filter, for downlink reception.

The first transmission and reception spatial filter may be determined based on the measurement result of the first spatial filter set and/or a prediction result of the second spatial filter set. That is, the first transmission and reception spatial filter may be a transmission and reception spatial filter for the first spatial filter set and/or a transmission and reception spatial filter for the second spatial filter set.

In some embodiments, in addition to transmitting the prediction result of the second spatial filter set to the network device, the terminal device may transmit the measurement result of the first spatial filter set to the network device, so that the network device provides a spatial filter indication of the first spatial filter set for the terminal device.

When the network device indicates the first transmission and reception spatial filter to the terminal device, the network device may indicate the first transmission and reception spatial filter by using a new field. For example, the network device may indicate the first transmission and reception spatial filter by using a transmission and reception spatial filter index (beam pair index), which is a new field.

The network device may indicate the first transmission and reception spatial filter by using one or more of an index of the first transmission and reception spatial filter, a CRI index, or an SSBRI index, that is, the first indication information may be the index of the first transmission and reception spatial filter, the CRI index, the SSBRI index, or the like.

In some embodiments, to reduce signalling overheads caused for providing a transmission and reception spatial filter indication by the network device, the network device may indicate transmission and reception spatial filters in a plurality of frequency bands by using one piece of indication information. The plurality of frequency bands may be associated with each other. A quantity of the plurality of frequency bands may be any integer greater than or equal to 2. The plurality of frequency bands may include a frequency band corresponding to the first spatial filter set and a frequency band corresponding to the second spatial filter set, or each of the plurality of frequency bands is a frequency band corresponding to the first spatial filter set, or each of the plurality of frequency bands is a frequency band corresponding to the second spatial filter set.

For example, the plurality of frequency bands may include the frequency band corresponding to the first spatial filter set and the frequency band corresponding to the second spatial filter set. The network device may transmit second indication information to the terminal device. The second indication information is used to indicate a second transmission and reception spatial filter. The second transmission and reception spatial filter includes a transmission and reception spatial filter in the first spatial filter set and a transmission and reception spatial filter in the second spatial filter set. The second transmission and reception spatial filter may be determined based on the measurement result of the first spatial filter set and the prediction result of the second spatial filter set.

It is assumed that optimal K transmission and reception spatial filters in the first spatial filter set are associated with optimal K transmission and reception spatial filters in the second spatial filter set, where a transmission and reception spatial filter 1 in the first spatial filter set is associated with a transmission and reception spatial filter 2 in the second spatial filter set. After the network device transmits the second indication information to the terminal device, the terminal device may determine the transmission and reception spatial filter 1 in the first spatial filter set and the transmission and reception spatial filter 2 in the second spatial filter set based on the second indication information. For the terminal device, it may be considered that the network device uses the transmission and reception spatial filter #1 for downlink transmission in the first frequency band, and that the network device uses the transmission and reception spatial filter #2 for downlink transmission in the second frequency band.

In some embodiments, if the terminal device obtains a prediction result of a transmission and reception spatial filter, the terminal device may report only a prediction result corresponding to a downlink transmission spatial filter. For a reporting manner of the terminal device and a manner in which the network device provides a spatial filter indication, reference may be made to the foregoing description. For brevity, details are not described herein again.

In some embodiments, the terminal device may predict the second spatial filter set by using the first model. For example, the terminal device may use the measurement result of the first spatial filter set as input of the first model, and output of the first model is the prediction result of the second spatial filter set.

A manner in which the terminal device obtains the first model is not specifically limited in embodiments of this application. In an example, the first model may be transmitted by the network device to the terminal device. The network device may transmit an identifier of the first model or a parameter of the first model to the terminal device. A manner in which the network device transmits the first model is not specifically limited in embodiments of this application. The network device may transmit the first model by using any signalling within the 3GPP framework. For example, the network device may transmit the first model to the terminal device by using RRC signalling or a MAC CE.

The first model may be a model that matches a deployment environment of the network device and spatial filter configuration of the terminal device. For example, if the terminal device supports spatial filter prediction for a frequency band (or frequency domain), and a model used for the prediction is a cell-specific model, the network device may transmit, to the terminal device, a model that matches the deployment environment of the network device and the spatial filter configuration.

In another example, the first model may alternatively be obtained by the terminal device by training. When predicting the second spatial filter set, the terminal device may start a model prepared in advance by the terminal device. To ensure that the terminal device and the network device have a clear and common understanding of the model, the terminal device may transmit the first model to the network device. For example, the terminal device may transmit a parameter of the first model or an identifier of the first model to the network device.

Referring to FIG. 17, the method shown in FIG. 17 includes step S1710 to step S1730.

In step S1710, the terminal device measures the first spatial filter set.

In step S1720, the terminal device transmits a measurement result of the first spatial filter set to the network device. The measurement result of the first spatial filter set is used to perform spatial filter prediction on the second spatial filter set.

In step S1730, the network device performs spatial filter prediction on the second spatial filter set based on the measurement result of the first spatial filter set.

Since the spatial filter prediction of the second spatial filter set is performed by the network device, the network device may not be required to configure the second spatial filter set for the terminal device.

In some embodiments, the first spatial filter set may be configured by the network device for the terminal device. For example, the network device may transmit second configuration information to the terminal device. The second configuration information may be used to configure the first spatial filter set.

The first spatial filter set may be determined based on a capability of the terminal device. In some embodiments, before the network device transmits the second configuration information to the terminal device, the terminal device may transmit second capability information to the network device. The second capability information may be used to determine the first spatial filter set.

The second capability information may include a measurement capability. For example, the second capability information may include one or more of the following: whether the terminal device supports spatial filter measurement or a quantity of spatial filters supported for measurement.

In some embodiments, the second capability information may include one or more of the following: a quantity of spatial filter sets that are measurable or a quantity of spatial filters that are measurable.

The quantity of spatial filter sets that are measurable may refer to a quantity of spatial filter sets corresponding to frequency bands that can be measured. For example, the frequency band is a CC/BWP. The quantity of spatial filter sets that are measurable may refer to a quantity of spatial filter sets corresponding to a maximum quantity of CCs/BWPs that can be measured.

The quantity of spatial filters that are measurable may include a total quantity of spatial filters that can be measured, or a quantity of spatial filters that can be measured in one spatial filter set. The quantity of spatial filters may refer to a quantity of SSBs and/or a quantity of CSI-RS resources. For example, the frequency band is a CC/BWP. For each CC/BWP, the quantity of spatial filters that can be measured in a spatial filter set may refer to a maximum quantity of SSBs and/or a maximum quantity of CSI-RS resources that can be measured in the spatial filter set corresponding to the respective CC/BWP.

A manner of configuring the first spatial filter set by the network device is not specifically limited in embodiments of this application. For example, the network device may configure only one spatial filter set. The spatial filter set is the first spatial filter set, and the terminal device measures the spatial filter set. For another example, the network device may configure a plurality of spatial filter sets for the terminal device, and the first spatial filter set is one of the plurality of spatial filter sets. After the plurality of spatial filter sets are configured, the network device may transmit third information to the terminal device. The third information is used to activate one of the plurality of spatial filter sets, and the terminal device may measure the one spatial filter set activated. The network device may activate any one of the plurality of spatial filter sets, or the network device may select, according to an actual deployment situation and an antenna configuration situation, which spatial filter set to activate. The activated spatial filter set may be the first spatial filter set. A manner of activating the first spatial filter set by the network device is not specifically limited in embodiments of this application. For example, the network device may activate the first spatial filter set by using a MAC CE.

In some embodiments, the terminal device may transmit the measurement result of the first spatial filter set to the network device. The measurement result may include link quality corresponding to the spatial filter. The measurement result may include, for example, RSRP and/or SINR corresponding to the spatial filter. The measurement result may be an L1 measurement result. For example, the measurement result may include L1-RSRP and/or L1-SINR corresponding to the spatial filter.

When transmitting the measurement result of the first spatial filter set to the network device, the terminal device may transmit measurement results of all of spatial filters in the first spatial filter set, or may transmit measurement results of some of spatial filters in the first spatial filter set.

If there are a plurality of first spatial filter sets, measurement results of the plurality of first spatial filter sets may be carried in a same message, or may be carried in different messages. A quantity N of first spatial filter sets is used as an example. Measurement results of the N first spatial filter sets may be carried in a second message, or measurement results of the N first spatial filter sets may be carried in different messages.

In some embodiments, if the measurement results of the plurality of first spatial filter sets are carried in the second message, the second message may further include indexes of the first spatial filter sets. The indexes of the first spatial filter sets may be used to indicate a frequency band to which the first spatial filter sets belong. The indexes of the first spatial filter sets may alternatively be a frequency band index. For example, the frequency band is a CC. The index of the first spatial filter set may be a serving cell index (serving cell index), which is used to mark a CC to which the first spatial filter sets belong. For example, the frequency band is a BWN. The index of the first spatial filter set may be a BWN ID, which is used to mark a BWN to which the first spatial filter sets belong.

In some embodiments, the second message may further include an index of a spatial filter in the first spatial filter set. The index of the spatial filter may be used to determine a spatial filter corresponding to the link quality in the second message.

It may be learned from FIG. 4 that a downlink spatial filter sweeping process may include a P1 process, a P2 process, or a P3 process. For the P1 process, the terminal device may measure a transmission and reception spatial filter. For the P2 process, the terminal device may measure a downlink transmission spatial filter. For the P3 process, the terminal device measures a downlink reception spatial filter. The following describes the three cases separately.

If the terminal device measures a downlink reception spatial filter, the terminal device may not report a measurement result, and the network device may also not indicate a reception spatial filter. After receiving a transmission spatial filter indicated by the network device, the terminal device may perform downlink reception by using a measured reception spatial filter corresponding to the transmission spatial filter.

In some embodiments, if the terminal device measures the transmission spatial filter indicated by the network device, as described in the P2 process above, the measurement result of the first spatial filter set may include an index of a spatial filter in the first spatial filter set and link quality corresponding to the spatial filter. If the terminal device measures a transmission and reception spatial filter, as described in the P1 process above, the measurement result of the first spatial filter set may include an index of a transmission and reception spatial filter in the first spatial filter set and link quality corresponding to the transmission and reception spatial filter.

In some embodiments, the measurement result of the first spatial filter set may be carried in a CSI field.

The following describes reporting information of the first spatial filter set by using an example in which the measurement result of the first spatial filter set includes an index of a spatial filter in the first spatial filter set and link quality corresponding to the spatial filter. The measurement result of the first spatial filter set may be as shown in Table 3.

**Table 3**

| **Quantity of CSI reports** | **CSI field** |
|---|---|
| CSI report #n | Serving cell index and/or a BWP ID #1 |
| | Spatial filter #1 |
| | Spatial filter #2 |
| | ... |
| | Spatial filter #M₁ |
| | Link quality corresponding to the spatial filter #1 |
| | Difference between link quality corresponding to the spatial filter #2 and the link quality corresponding to the spatial filter #1 |
| | ... |
| | Difference between link quality corresponding to the spatial filter #M₁ and the link quality corresponding to the spatial filter #1 |
| | Serving cell index and/or a BWP ID #2 |
| | Spatial filter #1 |
| | Spatial filter #2 |
| | ... |
| | Spatial filter #M₂ |
| | Link quality corresponding to the spatial filter #1 |
| | Difference between link quality corresponding to the spatial filter #2 and the link quality corresponding to the spatial filter #1 |
| | ... |
| | Difference between link quality corresponding to the spatial filter #M₂ and the link quality corresponding to the spatial filter #1 |
| | ... |
| | Serving cell index and/or a BWP ID #N |
| | Spatial filter #1 |
| | Spatial filter #2 |
| | ... |
| | Spatial filter #M_{N} |
| | Link quality corresponding to the spatial filter #1 |
| | Difference between link quality corresponding to the spatial filter #2 and the link quality corresponding to the spatial filter #1 |
| | ... |
| | Difference between link quality corresponding to the spatial filter #M_{N} and the link quality corresponding to the spatial filter #1 |

Referring to Table 3, the terminal device may report the measurement results of the N first spatial filter sets, and the N first spatial filter sets may be indicated by using the serving cell indexes or BWP IDs. Referring to Table 3, for the N first spatial filter sets, the CSI field may include a serving cell index and/or a BWP ID #1, a serving cell index and/or a BWP ID #2, a serving cell index and/or a BWP ID #3, ..., a serving cell index and/or a BWP ID #N.

For example, the first spatial filter set includes M spatial filters. The terminal device may report, for each first spatial filter set, the corresponding M spatial filters and link quality corresponding to the M spatial filters. The first spatial filter set #1 is used as an example. The first message (such as the CSI field) may include a spatial filter #1, a spatial filter #2, ..., a spatial filter #M1, link quality corresponding to the spatial filter #1, link quality corresponding to the spatial filter #2, ..., link quality corresponding to the spatial filter #M1. The spatial filter #x may be represented by a CRI or SSBRI#x. Link quality corresponding to the spatial filter #x may be represented by L1-RSRP/L1-SINR#x, where a value of x is 1, 2, ..., M.

When reporting link quality corresponding to spatial filters, to reduce overheads, the terminal device may use a differential reporting manner. For example, based on the link quality corresponding to the optimal spatial filter, link quality corresponding to other spatial filters may be reported.

The first spatial filter set #1 is used as an example. The optimal spatial filter may be the spatial filter #1, and corresponding link quality is L1-RSRP/L1-SINR#1. When reporting the link quality corresponding to the spatial filter #2, the terminal device may report a difference between L1-RSRP/L1-SINR#2 and L1-RSRP/L1-SINR#1. When reporting the link quality corresponding to the spatial filter #M1, the terminal device may report a difference between L1-RSRP/L1-SINR#M1 and L1-RSRP/L1-SINR#1.

Table 3 shows an aggregated reporting manner for spatial filters. In some embodiments, to reduce load, the measurement results of the N first spatial filter sets may alternatively be reported separately. For example, the measurement results of the N first spatial filter sets may be reported in N reports, each reporting a measurement result of one spatial filter set. Certainly, the measurement results of the N spatial filter sets may alternatively be reported in W reports, where W is greater than 1 and less than N.

If the terminal device reports a measurement result of a spatial filter, the network device may indicate a downlink transmission spatial filter to the terminal device. For example, the network device may use a spatial filter indication based on a TCI state. That is, the network device may transmit the TCI state to the terminal device. The TCI state may be used to indicate the downlink transmission spatial filter used by the network device.

For a spatial filter indication for a single frequency band, one TCI state is applicable to one frequency band. For a multiband common spatial filter indication, one TCI state is applicable to a plurality of frequency bands. The frequency band herein may be a CC or a BWP.

In some embodiments, to reduce signalling overheads caused for providing a spatial filter indication by the network device, the network device may indicate spatial filters in a plurality of frequency bands by using one piece of indication information. The plurality of frequency bands may be associated with each other. A quantity of the plurality of frequency bands may be any integer greater than or equal to 2. The plurality of frequency bands may include a frequency band corresponding to the first spatial filter set and a frequency band corresponding to the second spatial filter set, or each of the plurality of frequency bands is a frequency band corresponding to the first spatial filter set, or each of the plurality of frequency bands is a frequency band corresponding to the second spatial filter set.

For example, the plurality of frequency bands may include the frequency band corresponding to the first spatial filter set and the frequency band corresponding to the second spatial filter set. The network device may transmit fourth indication information to the terminal device. The fourth indication information is used to indicate a fourth spatial filter. The fourth spatial filter includes a spatial filter in the first spatial filter set and a spatial filter in the second spatial filter set. The second spatial filter may be determined based on the measurement result of the first spatial filter set and the prediction result of the second spatial filter set.

FIG. 18 is used as an example. It is assumed that optimal K spatial filters in the first spatial filter set are associated with optimal K spatial filters in the second spatial filter set, where a spatial filter 1 in the first spatial filter set is associated with a spatial filter 2 in the second spatial filter set. After the network device transmits the fourth indication information to the terminal device, the terminal device may determine the spatial filter 1 in the first spatial filter set and the spatial filter 2 in the second spatial filter set based on the fourth indication information. For the terminal device, it may be considered that the network device uses the spatial filter #1 for downlink transmission in the first frequency band, and the network device uses the spatial filter #2 for downlink transmission in the second frequency band.

The first spatial filter set is configured and/or provided by the network device for the terminal device. Therefore, to reduce signalling overheads for reporting, the terminal device may report measurement results in a preset order. The preset order may be an order agreed upon by the terminal device and the network device. The preset order may be determined based on an index order of first spatial filter sets and/or an index order of spatial filters.

In some embodiments, the measurement results of the plurality of first spatial filter sets may be sorted in the first preset order. In some embodiments, the measurement results of the spatial filters in each of the first spatial filter sets may be sorted in a second preset order. The first preset order may be determined based on indexes of the first spatial filter sets, and the second preset order may be determined based on indexes of the spatial filters. For example, the first preset order may be the indexes of the first spatial filter sets in ascending or descending order, and the second preset order may be the indexes of the spatial filters in ascending or descending order.

Table 4 and Table 5 show two manners in which the terminal device reports the measurement results. In Table 4, the terminal device may report index information of spatial filter sets. The terminal device may report spatial filters in each spatial filter set in ascending or descending order of indexes of the spatial filters. In Table 5, the terminal device may not be required to report index information of spatial filter sets and index information of spatial filters. The terminal device may report spatial filter sets in ascending or descending order of indexes of the spatial filter sets, and the terminal device may report spatial filters in each spatial filter set in ascending or descending order of indexes of the spatial filters. In other words, in Table 5, the terminal device may report only link quality corresponding to the spatial filters.

In Table 4 and Table 5, since the terminal device does not report the indexes of the spatial filter sets and/or the indexes of the spatial filters, the network device may not learn which spatial filter has best link quality. Therefore, the terminal device may report link quality corresponding to each spatial filter, without using the differential reporting manner.

**Table 4**

| **Quantity of CSI reports** | **CSI field** |
|---|---|
| CSI report #n | Serving cell index and/or a BWP ID #1 |
| | Link quality corresponding to a spatial filter #1 |
| | Link quality corresponding to a spatial filter #2 |
| | ... |
| | Link quality corresponding to a spatial filter #M₂ |
| | Serving cell index and/or a BWP ID #2 |
| | Link quality corresponding to a spatial filter #1 |
| | Link quality corresponding to a spatial filter #2 |
| | ... |
| | Link quality corresponding to a spatial filter #M₂ |
| | ... |
| | Serving cell index and/or a BWP ID #N |
| | Link quality corresponding to a spatial filter #1 |
| | Link quality corresponding to a spatial filter #2 |
| | ... |
| | Link quality corresponding to a spatial filter #M_{N} |

**Table 5**

| **Quantity of CSI reports** | **CSI field** |
|---|---|
| CSI report #n | Serving cell index and/or a BWP ID #1 |
| | Link quality corresponding to a spatial filter #1 in a set #1 |
| | Link quality corresponding to a spatial filter #2 in the set #1 |
| | ... |
| | Link quality corresponding to a spatial filter #M₂ in the set #1 |
| | Link quality corresponding to a spatial filter #1 in a set #2 |
| | Link quality corresponding to a spatial filter #2 in the set #2 |
| | ... |
| | Link quality corresponding to a spatial filter #M₂ in the set #2 |
| | ... |
| | Link quality corresponding to a spatial filter #1 in a set #N |
| | Link quality corresponding to a spatial filter #2 in the set #N |
| | ... |
| | Link quality corresponding to a spatial filter #M_{N} in the set #N |

The following describes reporting information of the first spatial filter set by using an example in which the measurement result of the first spatial filter set includes M transmission and reception spatial filters in the first spatial filter set and link quality corresponding to the M transmission and reception spatial filters. The measurement result of the first spatial filter set may be as shown in Table 6.

Referring to Table 6, the terminal device may report measurement results of P first spatial filter sets, and the P first spatial filter sets may be indicated by using serving cell indexes or BWP IDs. Referring to Table 6, for the P first spatial filter sets, the CSI field may include a serving cell index and/or a BWP ID #1, a serving cell index and/or a BWP ID #2, a serving cell index and/or a BWP ID #3, ..., a serving cell index and/or a BWP ID #P.

The terminal device may report, for each first spatial filter set, optimal four transmission and reception spatial filters and link quality corresponding to the optimal four transmission and reception spatial filters. The first spatial filter set #1 is used as an example. The CSI field may include a transmission and reception spatial filter #1, a transmission and reception spatial filter #2, a transmission and reception spatial filter #3, a transmission and reception spatial filter #4, link quality corresponding to the transmission and reception spatial filter #1, link quality corresponding to the transmission and reception spatial filter #2, link quality corresponding to the transmission and reception spatial filter #3, and link quality corresponding to the transmission and reception spatial filter #4. The transmission and reception spatial filter #x may be represented by a beam pair, a CSI, or SSBRI#x. Link quality corresponding to the transmission and reception spatial filter #x may be represented by L1-RSRP/L1-SINR#x, where a value of x is 1, 2, 3, or 4.

When reporting link quality corresponding to transmission and reception spatial filters, to reduce overheads, the terminal device may use a differential reporting manner. For example, based on the link quality corresponding to the optimal transmission and reception spatial filter, link quality corresponding to other transmission and reception spatial filters may be reported.

The first spatial filter set #1 is used as an example. The optimal transmission and reception spatial filter may be the transmission and reception spatial filter #1, and corresponding link quality is L1-RSRP/L1-SINR#1. When reporting the link quality corresponding to the transmission and reception spatial filter #2, the terminal device may report a difference between L1-RSRP/L1-SINR#2 and L1-RSRP/L1-SINR#1. When reporting the link quality corresponding to the transmission and reception spatial filter #3, the terminal device may report a difference between L1-RSRP/L1-SINR#3 and L1-RSRP/L1-SINR#1. When reporting the link quality corresponding to the transmission and reception spatial filter #4, the terminal device may report a difference between L1-RSRP/L1-SINR#4 and L1-RSRP/L1-SINR#1.

Table 6 shows an aggregated reporting manner for transmission and reception spatial filters. In some embodiments, to reduce load, the measurement results of the P first spatial filter sets may alternatively be reported separately. For example, the measurement results of the P first spatial filter sets may be reported in P reports, each reporting a measurement result of one spatial filter set. Certainly, the measurement results of the P transmission and reception spatial filters may alternatively be reported in W reports, where W is greater than 1 and less than P.

**Table 6**

| **Quantity of CSI reports** | **CSI field** |
|---|---|
| CSI report #n | Serving cell index and/or a BWP ID #1 |
| | Transmission and reception spatial filter #1 |
| | Transmission and reception spatial filter #2 |
| | ... |
| | Transmission and reception spatial filter ##M₁ |
| | Link quality corresponding to the transmission and reception spatial filter #1 |
| | Difference between link quality corresponding to the transmission and reception spatial filter #2 and the link quality corresponding to the transmission and reception spatial filter #1 |
| | ... |
| | Difference between link quality corresponding to the transmission and reception spatial filter #M₁ and the link quality corresponding to the transmission and reception spatial filter #1 |
| | Serving cell index and/or a BWP ID #2 |
| | Transmission and reception spatial filter #1 |
| | Transmission and reception spatial filter #2 |
| | ... |
| | Transmission and reception spatial filter ##M₂ |
| | Link quality corresponding to the transmission and reception spatial filter #1 |
| | Difference between link quality corresponding to the transmission and reception spatial filter #2 and the link quality corresponding to the transmission and reception spatial filter #1 |
| | ... |
| | Difference between link quality corresponding to the transmission and reception spatial filter #M₂ and the link quality corresponding to the transmission and reception spatial filter #1 |
| | ... |
| | Serving cell index and/or a BWP ID #N |
| | Transmission and reception spatial filter #1 |
| | Transmission and reception spatial filter #2 |
| | ... |
| | Transmission and reception spatial filter #M_{N} |
| | Link quality corresponding to the transmission and reception spatial filter #1 |
| | Difference between link quality corresponding to the transmission and reception spatial filter #2 and the link quality corresponding to the transmission and reception spatial filter #1 |
| | ... |
| | Difference between link quality corresponding to the transmission and reception spatial filter #M_{N} and the link quality corresponding to the transmission and reception spatial filter #1 |

If the terminal device measures a transmission and reception spatial filter, and/or reports a measurement result of the transmission and reception spatial filter, the network device may indicate the transmission and reception spatial filter to the terminal device by providing a spatial filter indication for the terminal device. That is, in addition to indicating a downlink transmission spatial filter to the terminal device, the network device may directly indicate a reception spatial filter to be used by the terminal device. In this way, an operation of the terminal device may be simplified, without relying on implementation of the terminal device for determining the reception spatial filter.

For example, the network device may transmit third indication information to the terminal device. The third indication information may be used to indicate a third transmission and reception spatial filter. After receiving the third transmission and reception spatial filter, the terminal device may determine a reception spatial filter for downlink reception based on the third transmission and reception spatial filter. For example, the terminal device may use the reception spatial filter, corresponding to the third transmission and reception spatial filter, for downlink reception.

The third transmission and reception spatial filter may be determined based on the measurement result of the first spatial filter set and/or a prediction result of the second spatial filter set. That is, the third transmission and reception spatial filter may be a transmission and reception spatial filter for the first spatial filter set and/or a transmission and reception spatial filter for the second spatial filter set.

When the network device indicates the third transmission and reception spatial filter to the terminal device, the network device may indicate the third transmission and reception spatial filter by using a new field. For example, the network device may indicate the third transmission and reception spatial filter by using a transmission and reception spatial filter index (beam pair index), which is a new field.

The network device may indicate the third transmission and reception spatial filter by using one or more of an index of the third transmission and reception spatial filter, a CRI index, or an SSBRI index, that is, the third indication information may be the index of the third transmission and reception spatial filter, the CRI index, the SSBRI index, or the like.

In some embodiments, to reduce signalling overheads caused for providing a transmission and reception spatial filter indication by the network device, the network device may indicate transmission and reception spatial filters in a plurality of frequency bands by using one piece of indication information. The plurality of frequency bands may be associated with each other. A quantity of the plurality of frequency bands may be any integer greater than or equal to 2. The plurality of frequency bands may include a frequency band corresponding to the first spatial filter set and a frequency band corresponding to the second spatial filter set, or each of the plurality of frequency bands is a frequency band corresponding to the first spatial filter set, or each of the plurality of frequency bands is a frequency band corresponding to the second spatial filter set.

For example, the plurality of frequency bands may include the frequency band corresponding to the first spatial filter set and the frequency band corresponding to the second spatial filter set. The network device may transmit fourth indication information to the terminal device. The fourth indication information is used to indicate a fourth transmission and reception spatial filter. The fourth transmission and reception spatial filter includes a transmission and reception spatial filter in the first spatial filter set and a transmission and reception spatial filter in the second spatial filter set. The fourth transmission and reception spatial filter may be determined based on the measurement result of the first spatial filter set and the prediction result of the second spatial filter set.

It is assumed that optimal K transmission and reception spatial filters in the first spatial filter set are associated with optimal K transmission and reception spatial filters in the second spatial filter set, where a transmission and reception spatial filter 1 in the first spatial filter set is associated with a transmission and reception spatial filter 2 in the second spatial filter set. After the network device transmits the fourth indication information to the terminal device, the terminal device may determine the transmission and reception spatial filter 1 in the first spatial filter set and the transmission and reception spatial filter 2 in the second spatial filter set based on the fourth indication information. For the terminal device, it may be considered that the network device uses the transmission and reception spatial filter #1 for downlink transmission in the first frequency band, and that the network device uses the transmission and reception spatial filter #2 for downlink transmission in the second frequency band.

In some embodiments, if the terminal device measures a beam pair, the terminal device may report only a measurement result corresponding to a downlink transmit beam. For a reporting manner of the terminal device and a manner in which the network device provides a beam indication, reference may be made to the foregoing description. For brevity, details are not described herein again.

In some embodiments, the network device may predict a second beam set by using the first model. For example, the network device may use a measurement result of a first beam set as input of the first model, and output of the first model is a prediction result of the second beam set.

It should be noted that the prediction method provided in embodiments of this application may be used alone, or may be used in combination with a time-domain prediction method and/or a spatial-domain prediction method. For example, when spatial filter prediction in spatial domain is used, spatial filter prediction in frequency domain may also be performed.

For example, for spatial filter prediction in spatial domain and frequency domain, the first frequency band includes two spatial filter sets, denoted as a spatial filter set 1 and a spatial filter set 2, where the spatial filter set 1 is a set that is required to be measured, and the spatial filter set 2 is a set that is required to be predicted. The second frequency band includes a spatial filter set 3, and the spatial filter set 3 is a set that is required to be predicted. The terminal device may predict the spatial filter set 2 by using a measurement result of the spatial filter set 1. In addition, the terminal device is also required to predict a spatial filter set 3 by using the measurement result of the spatial filter set 1.

It should be noted that the foregoing describes the process of using the first model, and the foregoing process is also applicable to a process of training the first model. This is not specifically limited in embodiments of this application. In addition, the foregoing describes optimization of the downlink beam management process. In some embodiments, the foregoing solution is also applicable to optimization of uplink beam management.

The foregoing describes the method embodiments of this application in detail with reference to FIG. 1 to FIG. 18. The following describes the apparatus embodiments of this application in detail with reference to FIG. 19 to FIG. 23. It should be understood that the description of the method embodiments corresponds to the description of the apparatus embodiments, and therefore, for a part that is not described in detail, reference may be made to the foregoing method embodiments.

FIG. 19 is a schematic block diagram of a terminal device according to an embodiment of this application. The terminal device 1900 shown in FIG. 19 may be any type of terminal device described above. The terminal device 1900 may include a measurement unit 1910 and a prediction unit 1920.

The measurement unit 1910 is configured to measure a first spatial filter set.

The prediction unit 1920 is configured to perform spatial filter prediction on a second spatial filter set based on a measurement result of the first spatial filter set.

The first spatial filter set corresponds to a first frequency band, and the second spatial filter set corresponds to a second frequency band.

Optionally, the terminal device further includes: a receiving unit, configured to receive first configuration information, where the first configuration information is used to configure the first spatial filter set and/or the second spatial filter set.

Optionally, the terminal device further includes: a transmitting unit, configured to transmit first capability information to a network device before receiving the first configuration information, where the first capability information is used to determine the first spatial filter set and/or the second spatial filter set.

Optionally, the first capability information includes one or more of the following: a quantity of spatial filter sets that are measurable, a quantity of spatial filter sets that are predictable, a quantity of spatial filters that are measurable, or a quantity of spatial filters that are predictable.

Optionally, the first spatial filter set is one of a plurality of spatial filter sets, and the terminal device further includes: a receiving unit, configured to receive first information transmitted by a network device, where the first information is used to activate the first spatial filter set in the plurality of spatial filter sets.

Optionally, the second spatial filter set is one of a plurality of spatial filter sets, and the terminal device further includes: a receiving unit, configured to receive second information transmitted by a network device, where the second information is used to activate the second spatial filter set in the plurality of spatial filter sets.

Optionally, spatial filters in the second spatial filter set are the same as spatial filters in the first spatial filter set.

Optionally, the terminal device further includes: a transmitting unit, configured to transmit a prediction result of the second spatial filter set to a network device.

Optionally, the second spatial filter set is a plurality of second spatial filter sets, and prediction results of the plurality of second spatial filter sets are carried in a first message.

Optionally, the first message further includes indexes of the second spatial filter sets.

Optionally, the second spatial filter set is a plurality of second spatial filter sets, and prediction results of the different second spatial filter sets are carried in different messages.

Optionally, a prediction result of the second spatial filter set includes a prediction result for a transmission and reception spatial filter, and the terminal device further includes: a receiving unit, configured to receive first indication information transmitted by a network device, where the first indication information is used to indicate a first transmission and reception spatial filter, and the first transmission and reception spatial filter is determined based on the measurement result of the first spatial filter set and/or a prediction result of the second spatial filter set; and a determining unit, configured to determine a spatial filter for downlink reception based on the first transmission and reception spatial filter.

Optionally, the terminal device further includes: a receiving unit, configured to receive second indication information transmitted by a network device, where the second indication information is used to indicate a second spatial filter, the second spatial filter includes a spatial filter in the first spatial filter set and a spatial filter in the second spatial filter set, and the second spatial filter is determined based on the measurement result of the first spatial filter set and a prediction result of the second spatial filter set.

Optionally, the prediction unit is configured to: use the measurement result of the first spatial filter set as input to a first model, where output of the first model includes a prediction result of the second spatial filter set.

Optionally, the terminal device further includes: a receiving unit, configured to receive the first model transmitted by a network device.

Optionally, a prediction result of the second spatial filter set includes one or more of the following: an optimal spatial filter, link quality corresponding to an optimal spatial filter, an optimal transmission and reception spatial filter, or link quality corresponding to an optimal transmission and reception spatial filter.

Optionally, the first frequency band and the second frequency band are determined based on a component carrier CC or a bandwidth part BWP.

FIG. 20 is a schematic block diagram of a network device according to an embodiment of this application. The network device 2000 shown in FIG. 20 may be any type of network device described above. The network device 2000 may include a transmitting unit 2010.

The transmitting unit 2010 is configured to transmit first configuration information to a terminal device, where the first configuration information is used to configure a first spatial filter set and/or a second spatial filter set, and a measurement result of the first spatial filter set is used to perform spatial filter prediction on the second spatial filter set. The first spatial filter set corresponds to a first frequency band, and the second spatial filter set corresponds to a second frequency band.

Optionally, the network device further includes: a receiving unit, configured to receive, before transmitting the first configuration information to the terminal device, first capability information transmitted by the terminal device, where the first capability information is used to determine the first spatial filter set and/or the second spatial filter set.

Optionally, the first capability information includes one or more of the following: a quantity of spatial filter sets that are measurable, a quantity of spatial filter sets that are predictable, a quantity of spatial filters that are measurable, or a quantity of spatial filters that are predictable.

Optionally, the first spatial filter set is one of a plurality of spatial filter sets, and the transmitting unit is further configured to: transmit first information to the terminal device, where the first information is used to activate the first spatial filter set in the plurality of spatial filter sets.

Optionally, the second spatial filter set is one of a plurality of spatial filter sets, and the transmitting unit is further configured to: transmit second information to the terminal device, where the second information is used to activate the second spatial filter set in the plurality of spatial filter sets.

Optionally, spatial filters in the second spatial filter set are the same as spatial filters in the first spatial filter set.

Optionally, the network device further includes: a receiving unit, configured to receive a prediction result of the second spatial filter set transmitted by the terminal device.

Optionally, the second spatial filter set is a plurality of second spatial filter sets, and prediction results of the plurality of second spatial filter sets are carried in a first message.

Optionally, the first message further includes indexes of the second spatial filter sets.

Optionally, the second spatial filter set is a plurality of second spatial filter sets, and prediction results of the different second spatial filter sets are carried in different messages.

Optionally, a prediction result of the second spatial filter set includes a prediction result for a transmission and reception spatial filter, and the transmitting unit is further configured to: transmit first indication information to the terminal device, where the first indication information is used to indicate a first transmission and reception spatial filter, the first transmission and reception spatial filter is determined based on the measurement result of the first spatial filter set and/or a prediction result of the second spatial filter set, and the first transmission and reception spatial filter is used to determine a spatial filter for downlink reception.

Optionally, the transmitting unit is further configured to: transmit second indication information to the terminal device, where the second indication information is used to indicate a second spatial filter, the second spatial filter includes a spatial filter in the first spatial filter set and a spatial filter in the second spatial filter set, and the second spatial filter is determined based on the measurement result of the first spatial filter set and a prediction result of the second spatial filter set.

Optionally, the measurement result of the first set being used to perform the spatial filter prediction on the second spatial filter set includes: using the measurement result of the first spatial filter set as input to a first model, where output of the first model includes a prediction result of the second spatial filter set.

Optionally, the transmitting unit is further configured to: transmit the first model to the terminal device.

Optionally, a prediction result of the second spatial filter set includes one or more of the following: an optimal spatial filter, link quality corresponding to an optimal spatial filter, an optimal transmission and reception spatial filter, or link quality corresponding to an optimal transmission and reception spatial filter.

Optionally, the first frequency band and the second frequency band are determined based on a component carrier CC or a bandwidth part BWP.

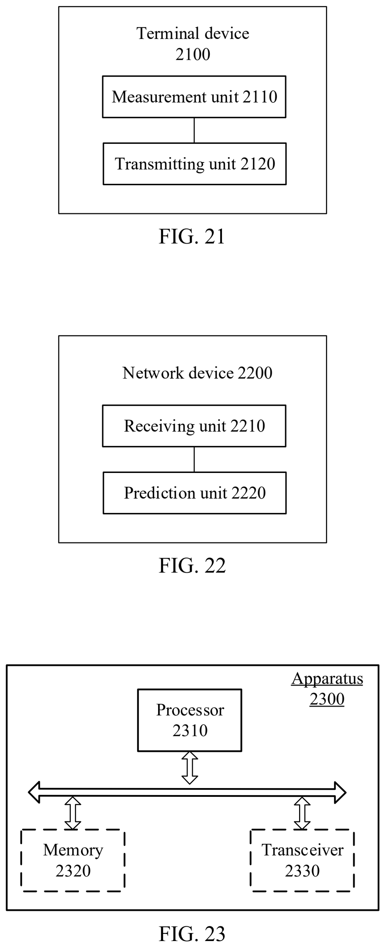

FIG. 21 is a schematic block diagram of another terminal device according to an embodiment of this application. The terminal device 2100 shown in FIG. 21 may be any type of terminal device described above. The terminal device 2100 may include a measurement unit 2110 and a transmitting unit 2120.

The measurement unit 2110 is configured to measure a first spatial filter set.

The transmitting unit 2120 is configured to transmit a measurement result of the first spatial filter set to a network device, where the measurement result of the first spatial filter set is used to perform spatial filter prediction on a second spatial filter set.

The first spatial filter set corresponds to a first frequency band, and the second spatial filter set corresponds to a second frequency band.

Optionally, the terminal device further includes: a receiving unit, configured to receive second configuration information transmitted by the network device, where the second configuration information is used to configure the first spatial filter set.

Optionally, the transmitting unit is further configured to: transmit second capability information to the network device before receiving the second configuration information transmitted by the network device, where the second capability information is used to determine the first spatial filter set.

Optionally, the second capability information includes one or more of the following: a quantity of spatial filter sets that are measurable, or a quantity of spatial filters that are measurable.

Optionally, the first spatial filter set is one of a plurality of spatial filter sets, and the terminal device further includes: a receiving unit, configured to receive third information transmitted by the network device, where the third information is used to activate the first spatial filter set in the plurality of spatial filter sets.

Optionally, the first spatial filter set is a plurality of first spatial filter sets, and measurement results of the plurality of first spatial filter sets are carried in a second message.

Optionally, the measurement results of the plurality of first spatial filter sets are sorted in a first preset order, and/or measurement results of spatial filters in each of the first spatial filter sets are sorted in a second preset order.

Optionally, the first preset order is determined based on indexes of the first spatial filter sets, and/or the second preset order is determined based on indexes of the spatial filters.

Optionally, the second message further includes frequency band indexes corresponding to the second spatial filter sets and indexes of spatial filters in the first spatial filter sets.

Optionally, the first spatial filter set is a plurality of first spatial filter sets, and measurement results of the plurality of first spatial filter sets are carried in different messages.

Optionally, the terminal device further includes: a receiving unit, configured to receive third indication information transmitted by the network device, where the third indication information is used to indicate a third transmission and reception spatial filter, and the third transmission and reception spatial filter is determined based on the measurement result of the first spatial filter set and/or a prediction result of the second spatial filter set; and a determining unit, configured to determine a spatial filter for downlink reception based on the third transmission and reception spatial filter.

Optionally, the terminal device further includes: a receiving unit, configured to receive fourth indication information transmitted by the network device, where the fourth indication information is used to indicate a fourth spatial filter, the fourth spatial filter includes a spatial filter in the first spatial filter set and a spatial filter in the second spatial filter set, and the second spatial filter is determined based on the measurement result of the first spatial filter set and a prediction result of the second spatial filter set.

Optionally, the measurement result of the first spatial filter set being used to perform prediction on the second spatial filter set includes: using the first spatial filter set as input to a first model, where output of the first model includes a prediction result of the second spatial filter set.

Optionally, the measurement result of the first spatial filter set includes link quality corresponding to a spatial filter in the first spatial filter set.

Optionally, the first frequency band and the second frequency band are determined based on a component carrier CC or a bandwidth part BWP.

FIG. 22 is a schematic block diagram of another network device according to an embodiment of this application. The network device 2200 shown in FIG. 22 may be any type of network device described above. The network device 2200 may include a receiving unit 2210 and a prediction unit 2220.

The receiving unit 2210 is configured to receive a measurement result of a first spatial filter set transmitted by a terminal device.

The prediction unit 2220 is configured to perform spatial filter prediction on a second spatial filter set based on a measurement result of the first spatial filter set.

The first spatial filter set corresponds to a first frequency band, and the second spatial filter set corresponds to a second frequency band.

Optionally, the network device further includes: a transmitting unit, configured to transmit second configuration information to the terminal device, where the second configuration information is used to configure the first spatial filter set.

Optionally, the receiving unit is further configured to: receive, before transmitting the second configuration information to the terminal device, second capability information transmitted by the terminal device, where the second capability information is used to determine the first spatial filter set.

Optionally, the second capability information includes one or more of the following: a quantity of spatial filter sets that are measurable, or a quantity of spatial filters that are measurable.

Optionally, the first spatial filter set is one of a plurality of spatial filter sets, and the network device further includes: a transmitting unit, configured to transmit third information to the terminal device, where the third information is used to activate the first spatial filter set in the plurality of spatial filter sets.

Optionally, the first spatial filter set is a plurality of first spatial filter sets, and measurement results of the plurality of first spatial filter sets are carried in a second message.

Optionally, the measurement results of the plurality of first spatial filter sets are sorted in a first preset order, and/or measurement results of spatial filters in each of the first spatial filter sets are sorted in a second preset order.

Optionally, the first preset order is determined based on indexes of the first spatial filter sets, and/or the second preset order is determined based on indexes of the spatial filters.

Optionally, the second message further includes frequency band indexes corresponding to the second spatial filter sets and indexes of spatial filters in the first spatial filter sets.

Optionally, the first spatial filter set is a plurality of first spatial filter sets, and measurement results of the plurality of first spatial filter sets are carried in different messages.

Optionally, the network device further includes: a transmitting unit, configured to transmit third indication information to the terminal device, where the third indication information is used to indicate a third transmission and reception spatial filter, the third transmission and reception spatial filter is determined based on the measurement result of the first spatial filter set and/or a prediction result of the second spatial filter set, and the third transmission and reception spatial filter is used to determine a spatial filter for downlink reception.

Optionally, the network device further includes: a transmitting unit, configured to transmit fourth indication information to the terminal device, where the fourth indication information is used to indicate a fourth spatial filter, the fourth spatial filter includes a spatial filter in the first spatial filter set and a spatial filter in the second spatial filter set, and the second spatial filter is determined based on the measurement result of the first spatial filter set and a prediction result of the second spatial filter set.

Optionally, the prediction unit is configured to: use the first spatial filter set as input to a first model, where output of the first model includes a prediction result of the second spatial filter set.

Optionally, the measurement result of the first spatial filter set includes link quality corresponding to a spatial filter in the first spatial filter set.

Optionally, the first frequency band and the second frequency band are determined based on a component carrier CC or a bandwidth part BWP.

FIG. 23 is a schematic structural diagram of an apparatus for online training according to an embodiment of this application. Dashed lines in FIG. 23 indicate that a unit or module is optional. The apparatus 2300 may be configured to implement the methods described in the foregoing method embodiments. The apparatus 2300 may be a chip, a terminal device, or a network device.

The apparatus 2300 may include one or more processors 2310. The processor 2310 may support the apparatus 2300 in implementing the methods described in the foregoing method embodiments. The processor 2310 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2300 may further include one or more memories 2321. The memory 2321 stores a program that may be executed by the processor 2310 to cause the processor 2310 to perform the methods described in the foregoing method embodiments. The memory 2321 may be separated from or integrated into the processor 2310.

The apparatus 2300 may further include a transceiver 2330. The processor 2310 may communicate with another device or chip through the transceiver 2330. For example, the processor 2310 may transmit data to and receive data from another device or chip through the transceiver 2330.

An embodiment of this application further provides a computer-readable storage medium for storing a program. The computer-readable storage medium may be applied to the terminal or the network device provided in the embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in the embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to execute the methods performed by the terminal or the network device in various embodiments of this application.

It should be understood that, in embodiments of this application, "B that is corresponding to A" means that B is associated with A, and B may be determined based on A. However, it should be further understood that, determining B based on A does not mean determining B based only on A, but instead, B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A spatial filter prediction method, comprising:
measuring, by a terminal device, a first spatial filter set; and
performing, by the terminal device, spatial filter prediction on a second spatial filter set based on a measurement result of the first spatial filter set,
wherein the first spatial filter set corresponds to a first frequency band, and the second spatial filter set corresponds to a second frequency band.

2. The method according to claim 1, further comprising:
receiving, by the terminal device, first configuration information, wherein the first configuration information is used to configure the first spatial filter set and/or the second spatial filter set.

3. The method according to claim 2, wherein before the receiving, by the terminal device, the first configuration information, the method further comprises:
transmitting, by the terminal device, first capability information to a network device, wherein the first capability information is used to determine the first spatial filter set and/or the second spatial filter set.

4. The method according to claim 3, wherein the first capability information comprises one or more of following: a quantity of spatial filter sets that are measurable, a quantity of spatial filter sets that are predictable, a quantity of spatial filters that are measurable, or a quantity of spatial filters that are predictable.

5. The method according to any one of claims 1 to 4, wherein the first spatial filter set is one of a plurality of spatial filter sets, and the method further comprises:
receiving, by the terminal device, first information transmitted by a network device, wherein the first information is used to activate the first spatial filter set in the plurality of spatial filter sets.

6. The method according to any one of claims 1 to 5, wherein the second spatial filter set is one of a plurality of spatial filter sets, and the method further comprises:
receiving, by the terminal device, second information transmitted by a network device, wherein the second information is used to activate the second spatial filter set in the plurality of spatial filter sets.

7. The method according to any one of claims 1 to 6, wherein spatial filters in the second spatial filter set are the same as spatial filters in the first spatial filter set.

8. The method according to any one of claims 1 to 7, further comprising:
transmitting, by the terminal device, a prediction result of the second spatial filter set to a network device.

9. The method according to claim 8, wherein the second spatial filter set is a plurality of second spatial filter sets, and prediction results of the plurality of second spatial filter sets are carried in a first message.

10. The method according to claim 9, wherein the first message further comprises indexes of the second spatial filter sets.

11. The method according to claim 8, wherein the second spatial filter set is a plurality of second spatial filter sets, and prediction results of the different second spatial filter sets are carried in different messages.

12. The method according to any one of claims 1 to 11, wherein a prediction result of the second spatial filter set comprises a prediction result for a transmission and reception spatial filter, and the method further comprises:
receiving, by the terminal device, first indication information transmitted by a network device, wherein the first indication information is used to indicate a first transmission and reception spatial filter, and the first transmission and reception spatial filter is determined based on the measurement result of the first spatial filter set and/or a prediction result of the second spatial filter set; and
determining, by the terminal device, a spatial filter for downlink reception based on the first transmission and reception spatial filter.

13. The method according to any one of claims 1 to 11, further comprising:
receiving, by the terminal device, second indication information transmitted by a network device, wherein the second indication information is used to indicate a second spatial filter, the second spatial filter comprises a spatial filter in the first spatial filter set and a spatial filter in the second spatial filter set, and the second spatial filter is determined based on the measurement result of the first spatial filter set and a prediction result of the second spatial filter set.

14. The method according to any one of claims 1 to 13, wherein the performing, by the terminal device, spatial filter prediction on the second spatial filter set based on the measurement result of the first spatial filter set comprises:
using, by the terminal device, the measurement result of the first spatial filter set as input to a first model, wherein output of the first model comprises a prediction result of the second spatial filter set.

15. The method according to claim 14, further comprising:
receiving, by the terminal device, the first model transmitted by a network device.

16. The method according to any one of claims 1 to 15, wherein a prediction result of the second spatial filter set comprises one or more of following: an optimal spatial filter, link quality corresponding to an optimal spatial filter, an optimal transmission and reception spatial filter, or link quality corresponding to an optimal transmission and reception spatial filter.

17. The method according to any one of claims 1 to 16, wherein the first frequency band and the second frequency band are determined based on a component carrier CC or a bandwidth part BWP.

18. A spatial filter prediction method, comprising:
transmitting, by a network device, first configuration information to a terminal device, wherein the first configuration information is used to configure a first spatial filter set and/or a second spatial filter set, and a measurement result of the first spatial filter set is used to perform spatial filter prediction on the second spatial filter set,
wherein the first spatial filter set corresponds to a first frequency band, and the second spatial filter set corresponds to a second frequency band.

19. The method according to claim 18, wherein before the transmitting, by the network device, the first configuration information to the terminal device, the method further comprises:
receiving, by the network device, first capability information transmitted by the terminal device, wherein the first capability information is used to determine the first spatial filter set and/or the second spatial filter set.

20. The method according to claim 18 or 19, wherein the first capability information comprises one or more of following:
a quantity of spatial filter sets that are measurable, a quantity of spatial filter sets that are predictable, a quantity of spatial filters that are measurable, or a quantity of spatial filters that are predictable.

21. The method according to any one of claims 18 to 20, wherein the first spatial filter set is one of a plurality of spatial filter sets, and the method further comprises:
transmitting, by the network device, first information to the terminal device, wherein the first information is used to activate the first spatial filter set in the plurality of spatial filter sets.

22. The method according to any one of claims 18 to 21, wherein the second spatial filter set is one of a plurality of spatial filter sets, and the method further comprises:
transmitting, by the network device, second information to the terminal device, wherein the second information is used to activate the second spatial filter set in the plurality of spatial filter sets.

23. The method according to any one of claims 18 to 22, wherein spatial filters in the second spatial filter set are the same as spatial filters in the first spatial filter set.

24. The method according to any one of claims 18 to 23, further comprising:
receiving, by the network device, a prediction result of the second spatial filter set transmitted by the terminal device.

25. The method according to claim 24, wherein the second spatial filter set is a plurality of second spatial filter sets, and prediction results of the plurality of second spatial filter sets are carried in a first message.

26. The method according to claim 25, wherein the first message further comprises indexes of the second spatial filter sets.

27. The method according to claim 24, wherein the second spatial filter set is a plurality of second spatial filter sets, and prediction results of the different second spatial filter sets are carried in different messages.

28. The method according to any one of claims 18 to 27, wherein a prediction result of the second spatial filter set comprises a prediction result for a transmission and reception spatial filter, and the method further comprises:
transmitting, by the network device, first indication information to the terminal device, wherein the first indication information is used to indicate a first transmission and reception spatial filter, the first transmission and reception spatial filter is determined based on the measurement result of the first spatial filter set and/or a prediction result of the second spatial filter set, and the first transmission and reception spatial filter is used to determine a spatial filter for downlink reception.

29. The method according to any one of claims 18 to 27, further comprising:
transmitting, by the network device, second indication information to the terminal device, wherein the second indication information is used to indicate a second spatial filter, the second spatial filter comprises a spatial filter in the first spatial filter set and a spatial filter in the second spatial filter set, and the second spatial filter is determined based on the measurement result of the first spatial filter set and a prediction result of the second spatial filter set.

30. The method according to any one of claims 18 to 29, wherein the measurement result of the first set being used to perform the spatial filter prediction on the second spatial filter set comprises: using the measurement result of the first spatial filter set as input to a first model, wherein output of the first model comprises a prediction result of the second spatial filter set.

31. The method according to claim 30, further comprising:
transmitting, by the network device, the first model to the terminal device.

32. The method according to any one of claims 18 to 31, wherein a prediction result of the second spatial filter set comprises one or more of following: an optimal spatial filter, link quality corresponding to an optimal spatial filter, an optimal transmission and reception spatial filter, or link quality corresponding to an optimal transmission and reception spatial filter.

33. The method according to any one of claims 18 to 32, wherein the first frequency band and the second frequency band are determined based on a component carrier CC or a bandwidth part BWP.

34. A spatial filter prediction method, comprising:
measuring, by a terminal device, a first spatial filter set; and
transmitting, by the terminal device, a measurement result of the first spatial filter set to a network device, wherein the measurement result of the first spatial filter set is used to perform spatial filter prediction on a second spatial filter set,
wherein the first spatial filter set corresponds to a first frequency band, and the second spatial filter set corresponds to a second frequency band.

35. The method according to claim 34, further comprising:
receiving, by the terminal device, second configuration information transmitted by the network device, wherein the second configuration information is used to configure the first spatial filter set.

36. The method according to claim 35, wherein before the receiving, by the terminal device, the second configuration information transmitted by the network device, the method further comprises:
transmitting, by the terminal device, second capability information to the network device, wherein the second capability information is used to determine the first spatial filter set.

37. The method according to claim 36, wherein the second capability information comprises one or more of following: a quantity of spatial filter sets that are measurable, or a quantity of spatial filters that are measurable.

38. The method according to any one of claims 34 to 37, wherein the first spatial filter set is one of a plurality of spatial filter sets, and the method further comprises:
receiving, by the terminal device, third information transmitted by the network device, wherein the third information is used to activate the first spatial filter set in the plurality of spatial filter sets.

39. The method according to any one of claims 34 to 38, wherein the first spatial filter set is a plurality of first spatial filter sets, and measurement results of the plurality of first spatial filter sets are carried in a second message.

40. The method according to claim 39, wherein the measurement results of the plurality of first spatial filter sets are sorted in a first preset order, and/or measurement results of spatial filters in each of the first spatial filter sets are sorted in a second preset order.

41. The method according to claim 40, wherein the first preset order is determined based on indexes of the first spatial filter sets, and/or the second preset order is determined based on indexes of the spatial filters.

42. The method according to claim 39, wherein the second message further comprises frequency band indexes corresponding to the second spatial filter sets and indexes of spatial filters in the first spatial filter sets.

43. The method according to any one of claims 34 to 38, wherein the first spatial filter set is a plurality of first spatial filter sets, and measurement results of the plurality of first spatial filter sets are carried in different messages.

44. The method according to any one of claims 34 to 43, further comprising:
receiving, by the terminal device, third indication information transmitted by the network device, wherein the third indication information is used to indicate a third transmission and reception spatial filter, and the third transmission and reception spatial filter is determined based on the measurement result of the first spatial filter set and/or a prediction result of the second spatial filter set; and
determining, by the terminal device, a spatial filter for downlink reception based on the third transmission and reception spatial filter.

45. The method according to any one of claims 34 to 43, further comprising:
receiving, by the terminal device, fourth indication information transmitted by the network device, wherein the fourth indication information is used to indicate a fourth spatial filter, the fourth spatial filter comprises a spatial filter in the first spatial filter set and a spatial filter in the second spatial filter set, and the second spatial filter is determined based on the measurement result of the first spatial filter set and a prediction result of the second spatial filter set.

46. The method according to any one of claims 34 to 45, wherein the measurement result of the first spatial filter set being used to perform prediction on the second spatial filter set comprises: using the first spatial filter set as input to a first model, wherein output of the first model comprises a prediction result of the second spatial filter set.

47. The method according to any one of claims 34 to 46, wherein the measurement result of the first spatial filter set comprises link quality corresponding to a spatial filter in the first spatial filter set.

48. The method according to any one of claims 34 to 47, wherein the first frequency band and the second frequency band are determined based on a component carrier CC or a bandwidth part BWP.

49. A spatial filter prediction method, comprising:
receiving, by a network device, a measurement result of a first spatial filter set transmitted by a terminal device; and
performing, by the network device, spatial filter prediction on a second spatial filter set based on the measurement result of the first spatial filter set,
wherein the first spatial filter set corresponds to a first frequency band, and the second spatial filter set corresponds to a second frequency band.

50. The method according to claim 49, further comprising:
transmitting, by the network device, second configuration information to the terminal device, wherein the second configuration information is used to configure the first spatial filter set.

51. The method according to claim 50, wherein before the transmitting, by the network device, the second configuration information to the terminal device, the method further comprises:
receiving, by the network device, second capability information transmitted by the terminal device, wherein the second capability information is used to determine the first spatial filter set.

52. The method according to claim 51, wherein the second capability information comprises one or more of following: a quantity of spatial filter sets that are measurable, or a quantity of spatial filters that are measurable.

53. The method according to any one of claims 49 to 52, wherein the first spatial filter set is one of a plurality of spatial filter sets, and the method further comprises:
transmitting, by the network device, third information to the terminal device, wherein the third information is used to activate the first spatial filter set in the plurality of spatial filter sets.

54. The method according to any one of claims 49 to 53, wherein the first spatial filter set is a plurality of first spatial filter sets, and measurement results of the plurality of first spatial filter sets are carried in a second message.

55. The method according to claim 54, wherein the measurement results of the plurality of first spatial filter sets are sorted in a first preset order, and/or measurement results of spatial filters in each of the first spatial filter sets are sorted in a second preset order.

56. The method according to claim 55, wherein the first preset order is determined based on indexes of the first spatial filter sets, and/or the second preset order is determined based on indexes of the spatial filters.

57. The method according to claim 54, wherein the second message further comprises frequency band indexes corresponding to the second spatial filter sets and indexes of spatial filters in the first spatial filter sets.

58. The method according to any one of claims 49 to 53, wherein the first spatial filter set is a plurality of first spatial filter sets, and measurement results of the plurality of first spatial filter sets are carried in different messages.

59. The method according to any one of claims 49 to 58, further comprising:
transmitting, by the network device, third indication information to the terminal device, wherein the third indication information is used to indicate a third transmission and reception spatial filter, the third transmission and reception spatial filter is determined based on the measurement result of the first spatial filter set and/or a prediction result of the second spatial filter set, and the third transmission and reception spatial filter is used to determine a spatial filter for downlink reception.

60. The method according to any one of claims 49 to 58, further comprising:
transmitting, by the network device, fourth indication information to the terminal device, wherein the fourth indication information is used to indicate a fourth spatial filter, the fourth spatial filter comprises a spatial filter in the first spatial filter set and a spatial filter in the second spatial filter set, and the second spatial filter is determined based on the measurement result of the first spatial filter set and a prediction result of the second spatial filter set.

61. The method according to any one of claims 49 to 60, wherein the performing, by the network device, prediction on the second spatial filter set based on the measurement result of the first spatial filter set comprises:
using, by the network device, the first spatial filter set as input to a first model, wherein output of the first model comprises a prediction result of the second spatial filter set.

62. The method according to any one of claims 49 to 61, wherein the measurement result of the first spatial filter set comprises link quality corresponding to a spatial filter in the first spatial filter set.

63. The method according to any one of claims 49 to 62, wherein the first frequency band and the second frequency band are determined based on a component carrier CC or a bandwidth part BWP.

64. A terminal device, comprising:
a measurement unit, configured to measure a first spatial filter set; and
a prediction unit, configured to perform spatial filter prediction on a second spatial filter set based on a measurement result of the first spatial filter set,
wherein the first spatial filter set corresponds to a first frequency band, and the second spatial filter set corresponds to a second frequency band.

65. The terminal device according to claim 64, further comprising:
a receiving unit, configured to receive first configuration information, wherein the first configuration information is used to configure the first spatial filter set and/or the second spatial filter set.

66. The terminal device according to claim 65, further comprising:
a transmitting unit, configured to transmit first capability information to a network device before receiving the first configuration information, wherein the first capability information is used to determine the first spatial filter set and/or the second spatial filter set.

67. The terminal device according to claim 66, wherein the first capability information comprises one or more of following: a quantity of spatial filter sets that are measurable, a quantity of spatial filter sets that are predictable, a quantity of spatial filters that are measurable, or a quantity of spatial filters that are predictable.

68. The terminal device according to any one of claims 64 to 67, wherein the first spatial filter set is one of a plurality of spatial filter sets, and the terminal device further comprises:
a receiving unit, configured to receive first information transmitted by a network device, wherein the first information is used to activate the first spatial filter set in the plurality of spatial filter sets.

69. The terminal device according to any one of claims 64 to 68, wherein the second spatial filter set is one of a plurality of spatial filter sets, and the terminal device further comprises:
a receiving unit, configured to receive second information transmitted by a network device, wherein the second information is used to activate the second spatial filter set in the plurality of spatial filter sets.

70. The terminal device according to any one of claims 64 to 69, wherein spatial filters in the second spatial filter set are the same as spatial filters in the first spatial filter set.

71. The terminal device according to any one of claims 64 to 70, further comprising:
a transmitting unit, configured to transmit a prediction result of the second spatial filter set to a network device.

72. The terminal device according to claim 71, wherein the second spatial filter set is a plurality of second spatial filter sets, and prediction results of the plurality of second spatial filter sets are carried in a first message.

73. The terminal device according to claim 72, wherein the first message further comprises indexes of the second spatial filter sets.

74. The terminal device according to claim 71, wherein the second spatial filter set is a plurality of second spatial filter sets, and prediction results of the different second spatial filter sets are carried in different messages.

75. The terminal device according to any one of claims 64 to 74, wherein a prediction result of the second spatial filter set comprises a prediction result for a transmission and reception spatial filter, and the terminal device further comprises:
a receiving unit, configured to receive first indication information transmitted by a network device, wherein the first indication information is used to indicate a first transmission and reception spatial filter, and the first transmission and reception spatial filter is determined based on the measurement result of the first spatial filter set and/or a prediction result of the second spatial filter set; and
a determining unit, configured to determine a spatial filter for downlink reception based on the first transmission and reception spatial filter.

76. The terminal device according to any one of claims 64 to 74, further comprising:
a receiving unit, configured to receive second indication information transmitted by a network device, wherein the second indication information is used to indicate a second spatial filter, the second spatial filter comprises a spatial filter in the first spatial filter set and a spatial filter in the second spatial filter set, and the second spatial filter is determined based on the measurement result of the first spatial filter set and a prediction result of the second spatial filter set.

77. The terminal device according to any one of claims 64 to 76, wherein the prediction unit is configured to:
use the measurement result of the first spatial filter set as input to a first model, wherein output of the first model comprises a prediction result of the second spatial filter set.

78. The terminal device according to claim 77, further comprising:
a receiving unit, configured to receive the first model transmitted by a network device.

79. The terminal device according to any one of claims 64 to 78, wherein a prediction result of the second spatial filter set comprises one or more of following: an optimal spatial filter, link quality corresponding to an optimal spatial filter, an optimal transmission and reception spatial filter, or link quality corresponding to an optimal transmission and reception spatial filter.

80. The terminal device according to any one of claims 64 to 79, wherein the first frequency band and the second frequency band are determined based on a component carrier CC or a bandwidth part BWP.

81. A network device, comprising:
a transmitting unit, configured to transmit first configuration information to a terminal device, wherein the first configuration information is used to configure a first spatial filter set and/or a second spatial filter set, and a measurement result of the first spatial filter set is used to perform spatial filter prediction on the second spatial filter set,
wherein the first spatial filter set corresponds to a first frequency band, and the second spatial filter set corresponds to a second frequency band.

82. The network device according to claim 81, further comprising:
a receiving unit, configured to receive, before transmitting the first configuration information to the terminal device, first capability information transmitted by the terminal device, wherein the first capability information is used to determine the first spatial filter set and/or the second spatial filter set.

83. The network device according to claim 81 or 82, wherein the first capability information comprises one or more of following: a quantity of spatial filter sets that are measurable, a quantity of spatial filter sets that are predictable, a quantity of spatial filters that are measurable, or a quantity of spatial filters that are predictable.

84. The network device according to any one of claims 81 to 83, wherein the first spatial filter set is one of a plurality of spatial filter sets, and the transmitting unit is further configured to:
transmit first information to the terminal device, wherein the first information is used to activate the first spatial filter set in the plurality of spatial filter sets.

85. The network device according to any one of claims 81 to 84, wherein the second spatial filter set is one of a plurality of spatial filter sets, and the transmitting unit is further configured to:
transmit second information to the terminal device, wherein the second information is used to activate the second spatial filter set in the plurality of spatial filter sets.

86. The network device according to any one of claims 81 to 85, wherein spatial filters in the second spatial filter set are the same as spatial filters in the first spatial filter set.

87. The network device according to any one of claims 81 to 86, further comprising:
a receiving unit, configured to receive a prediction result of the second spatial filter set transmitted by the terminal device.

88. The network device according to claim 87, wherein the second spatial filter set is a plurality of second spatial filter sets, and prediction results of the plurality of second spatial filter sets are carried in a first message.

89. The network device according to claim 88, wherein the first message further comprises indexes of the second spatial filter sets.

90. The network device according to claim 87, wherein the second spatial filter set is a plurality of second spatial filter sets, and prediction results of the different second spatial filter sets are carried in different messages.

91. The network device according to any one of claims 81 to 90, wherein a prediction result of the second spatial filter set comprises a prediction result for a transmission and reception spatial filter, and the transmitting unit is further configured to:
transmit first indication information to the terminal device, wherein the first indication information is used to indicate a first transmission and reception spatial filter, the first transmission and reception spatial filter is determined based on the measurement result of the first spatial filter set and/or a prediction result of the second spatial filter set, and the first transmission and reception spatial filter is used to determine a spatial filter for downlink reception.

92. The network device according to any one of claims 81 to 90, wherein the transmitting unit is configured to:
transmit second indication information to the terminal device, wherein the second indication information is used to indicate a second spatial filter, the second spatial filter comprises a spatial filter in the first spatial filter set and a spatial filter in the second spatial filter set, and the second spatial filter is determined based on the measurement result of the first spatial filter set and a prediction result of the second spatial filter set.

93. The network device according to any one of claims 81 to 92, wherein the measurement result of the first set being used to perform the spatial filter prediction on the second spatial filter set comprises: using the measurement result of the first spatial filter set as input to a first model, wherein output of the first model comprises a prediction result of the second spatial filter set.

94. The network device according to claim 93, wherein the transmitting unit is further configured to:
transmit the first model to the terminal device.

95. The network device according to any one of claims 81 to 94, wherein a prediction result of the second spatial filter set comprises one or more of following: an optimal spatial filter, link quality corresponding to an optimal spatial filter, an optimal transmission and reception spatial filter, or link quality corresponding to an optimal transmission and reception spatial filter.

96. The network device according to any one of claims 81 to 95, wherein the first frequency band and the second frequency band are determined based on a component carrier CC or a bandwidth part BWP.

97. A terminal device, comprising:
a measurement unit, configured to measure a first spatial filter set; and
a transmitting unit, configured to transmit a measurement result of the first spatial filter set to a network device, wherein the measurement result of the first spatial filter set is used to perform spatial filter prediction on a second spatial filter set,
wherein the first spatial filter set corresponds to a first frequency band, and the second spatial filter set corresponds to a second frequency band.

98. The terminal device according to claim 97, further comprising:
a receiving unit, configured to receive second configuration information transmitted by the network device, wherein the second configuration information is used to configure the first spatial filter set.

99. The terminal device according to claim 98, wherein the transmitting unit is further configured to:
transmit second capability information to the network device before receiving the second configuration information transmitted by the network device, wherein the second capability information is used to determine the first spatial filter set.

100. The terminal device according to claim 99, wherein the second capability information comprises one or more of following: a quantity of spatial filter sets that are measurable, or a quantity of spatial filters that are measurable.

101. The terminal device according to any one of claims 97 to 100, wherein the first spatial filter set is one of a plurality of spatial filter sets, and the terminal device further comprises:
a receiving unit, configured to receive third information transmitted by the network device, wherein the third information is used to activate the first spatial filter set in the plurality of spatial filter sets.

102. The terminal device according to any one of claims 97 to 101, wherein the first spatial filter set is a plurality of first spatial filter sets, and measurement results of the plurality of first spatial filter sets are carried in a second message.

103. The terminal device according to claim 102, wherein the measurement results of the plurality of first spatial filter sets are sorted in a first preset order, and/or measurement results of spatial filters in each of the first spatial filter sets are sorted in a second preset order.

104. The terminal device according to claim 103, wherein the first preset order is determined based on indexes of the first spatial filter sets, and/or the second preset order is determined based on indexes of the spatial filters.

105. The terminal device according to claim 102, wherein the second message further comprises frequency band indexes corresponding to the second spatial filter sets and indexes of spatial filters in the first spatial filter sets.

106. The terminal device according to any one of claims 97 to 101, wherein the first spatial filter set is a plurality of first spatial filter sets, and measurement results of the plurality of first spatial filter sets are carried in different messages.

107. The terminal device according to any one of claims 97 to 106, further comprising:
a receiving unit, configured to receive third indication information transmitted by the network device, wherein the third indication information is used to indicate a third transmission and reception spatial filter, and the third transmission and reception spatial filter is determined based on the measurement result of the first spatial filter set and/or a prediction result of the second spatial filter set; and
a determining unit, configured to determine a spatial filter for downlink reception based on the third transmission and reception spatial filter.

108. The terminal device according to any one of claims 97 to 106, further comprising:
a receiving unit, configured to receive fourth indication information transmitted by the network device, wherein the fourth indication information is used to indicate a fourth spatial filter, the fourth spatial filter comprises a spatial filter in the first spatial filter set and a spatial filter in the second spatial filter set, and the second spatial filter is determined based on the measurement result of the first spatial filter set and a prediction result of the second spatial filter set.

109. The terminal device according to any one of claims 97 to 108, wherein the measurement result of the first spatial filter set being used to perform prediction on the second spatial filter set comprises: using the first spatial filter set as input to a first model, wherein output of the first model comprises a prediction result of the second spatial filter set.

110. The terminal device according to any one of claims 97 to 109, wherein the measurement result of the first spatial filter set comprises link quality corresponding to a spatial filter in the first spatial filter set.

111. The terminal device according to any one of claims 97 to 110, wherein the first frequency band and the second frequency band are determined based on a component carrier CC or a bandwidth part BWP.

112. A network device, comprising:
a receiving unit, configured to receive a measurement result of a first spatial filter set transmitted by a terminal device; and
a prediction unit, configured to perform spatial filter prediction on a second spatial filter set based on a measurement result of the first spatial filter set,
wherein the first spatial filter set corresponds to a first frequency band, and the second spatial filter set corresponds to a second frequency band.

113. The network device according to claim 112, further comprising:
a transmitting unit, configured to transmit second configuration information to the terminal device, wherein the second configuration information is used to configure the first spatial filter set.

114. The network device according to claim 113, wherein the receiving unit is further configured to:
receive, before transmitting the second configuration information to the terminal device, second capability information transmitted by the terminal device, wherein the second capability information is used to determine the first spatial filter set.

115. The network device according to claim 114, wherein the second capability information comprises one or more of following: a quantity of spatial filter sets that are measurable, or a quantity of spatial filters that are measurable.

116. The network device according to any one of claims 112 to 115, wherein the first spatial filter set is one of a plurality of spatial filter sets, and the network device further comprises:
a transmitting unit, configured to transmit third information to the terminal device, wherein the third information is used to activate the first spatial filter set in the plurality of spatial filter sets.

117. The network device according to any one of claims 112 to 116, wherein the first spatial filter set is a plurality of first spatial filter sets, and measurement results of the plurality of first spatial filter sets are carried in a second message.

118. The network device according to claim 117, wherein the measurement results of the plurality of first spatial filter sets are sorted in a first preset order, and/or measurement results of spatial filters in each of the first spatial filter sets are sorted in a second preset order.

119. The network device according to claim 118, wherein the first preset order is determined based on indexes of the first spatial filter sets, and/or the second preset order is determined based on indexes of the spatial filters.

120. The network device according to claim 117, wherein the second message further comprises frequency band indexes corresponding to the second spatial filter sets and indexes of spatial filters in the first spatial filter sets.

121. The network device according to any one of claims 112 to 116, wherein the first spatial filter set is a plurality of first spatial filter sets, and measurement results of the plurality of first spatial filter sets are carried in different messages.

122. The network device according to any one of claims 112 to 121, further comprising:
a transmitting unit, configured to transmit third indication information to the terminal device, wherein the third indication information is used to indicate a third transmission and reception spatial filter, the third transmission and reception spatial filter is determined based on the measurement result of the first spatial filter set and/or a prediction result of the second spatial filter set, and the third transmission and reception spatial filter is used to determine a spatial filter for downlink reception.

123. The network device according to any one of claims 112 to 121, further comprising:
a transmitting unit, configured to transmit fourth indication information to the terminal device, wherein the fourth indication information is used to indicate a fourth spatial filter, the fourth spatial filter comprises a spatial filter in the first spatial filter set and a spatial filter in the second spatial filter set, and the second spatial filter is determined based on the measurement result of the first spatial filter set and a prediction result of the second spatial filter set.

124. The network device according to any one of claims 112 to 123, wherein the prediction unit is configured to:
use the first spatial filter set as input to a first model, wherein output of the first model comprises a prediction result of the second spatial filter set.

125. The network device according to any one of claims 112 to 124, wherein the measurement result of the first spatial filter set comprises link quality corresponding to a spatial filter in the first spatial filter set.

126. The network device according to any one of claims 112 to 125, wherein the first frequency band and the second frequency band are determined based on a component carrier CC or a bandwidth part BWP.

127. A terminal device, comprising a memory and a processor, wherein the memory is configured to store a program, and the processor is configured to invoke the program in the memory to execute the method according to any one of claims 1 to 17 or claims 34 to 48.

128. A network device, comprising a memory and a processor, wherein the memory is configured to store a program, and the processor is configured to invoke the program in the memory to execute the method according to any one of claims 18 to 33 or claims 49 to 63.

129. An apparatus, comprising a processor, configured to invoke a program from a memory to execute the method according to any one of claims 1 to 63.

130. A chip, comprising a processor configured to invoke a program from a memory to cause a device installed with the chip to execute the method according to any one of claims 1 to 63.

131. A computer-readable storage medium, wherein the computer-readable storage medium stores a program, and the program causes a computer to execute the method according to any one of claims 1 to 63.

132. A computer program product, comprising a program that causes a computer to execute the method according to any one of claims 1 to 63.

133. A computer program, wherein the computer program causes a computer to execute the method according to any one of claims 1 to 63.
